Europäisches Patentamt

European Patent Office

Office européen des brevets

(19)

(11) **EP 1 341 101 A2**

(12) **EUROPEAN PATENT APPLICATION**

(43) Date of publication:
03.09.2003 Bulletin 2003/36

(51) Int Cl.7: **G06F 17/30**

(21) Application number: **03251244.4**

(22) Date of filing: **28.02.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **28.02.2002 JP 2002053895
19.03.2002 JP 2002076767**

(71) Applicant: **Ricoh Company, Ltd.
Tokyo 143-8555 (JP)**

(72) Inventor: **Ogawa, Yasushi,
c/o Ricoh Company, Ltd.
Tokyo 143-8555 (JP)**

(74) Representative: **Leeming, John Gerard
J.A. Kemp & Co.,
14 South Square,
Gray's Inn
London WC1R 5JJ (GB)**

(54) **System and method for document retrieval**

(57)    A document retrieval system with program storage device and computer program product capable of providing excellent capabilities of accurate document retrieval even using plural indices, to thereby attain the accuracy as high as that for a single index previously employed. The document retrieval system 100 is provided with an index section 16 for storing and managing plural indices which are each generated for respective groups of documents divided to be currently retrieved; a retrieval condition analyzing section 11 for analyzing acquired retrieval conditions, dividing a retrieval character string contained in the retrieval conditions into index units, and representing the retrieval conditions in terms of a predetermined internal representation for each index; a TF computing section 12, a DF computing section 13, and a DF term computing section 14 for specifying the documents corresponding to the retrieval conditions; and a merging section 15 for merging retrieval results obtained for each index and generating final retrieval results.

**FIG. 2**

## Description

This patent specification relates generally to a system and a method for document retrieval, and more particularly to such system incorporating a recording medium, and the method utilizing computer program products for retrieving documents contained in plural indices in reference to retrieval character strings.

To increase retrieval speed in methods for document retrieval, plural indices prepared in advance for use in the retrieval have generally been used. Details on such document retrieval are described, for example, by W. B. Frakes Ed., *Information Retrieval-Data Structures and Algorithms,* Prentice Hall, 1992.

In order to implement such a retrieval method effectively, documents have to be indexed in advance. With an increase in the number of the documents, it takes more time for a document to be indexed.

To alleviate such a difficulty in some methods, two indices are prepared, for example. Documents to be retrieved are first registered in a first index and, when the number of the document reaches a determined value, the contents thereof are put together or integrated to be reflected to the contents of a second index. This may lead to the reduction in retrieval time over that of document by document retrieval, to thereby alleviate the increase in document registration time.

Furthermore, another method has been practiced, in which the documents to be currently retrieved are divided into several groups and separate indices are prepared for each of the groups. These indices are subsequently in use for the retrieval to be able to accommodate a vast number of documents and to alleviate the increase in registration time over the retrieval processing using a single index.

Incidentally, in cases where plural indices are used, the results from the indices are subsequently merged to generate final results.

In a ranking retrieval method, for example, in which ranking of documents are obtained, an evaluated value (hereinafter referred to as 'score') is calculated based on frequency information of retrieval character strings appearing in documents.

The score is generally calculated in reference primarily to two terms, the one being a document frequency of retrieval character string (i.e., the number of documents containing the retrieval character string in the retrieval document ensemble or df term), and the other a document frequency within document (i.e., the occurrence number of the retrieval character string in a document or tf term), using the relation

$$score(k) = tf(k) \{1 + \log 2 (N/ df(k))\} \qquad (1),$$

where $tf(k)$ is the document frequency within document of the retrieval character string $k$, $df(k)$ the document frequency, and $N$ the number of documents currently registered.

As to the document frequency, it is noted each index includes the document frequency related to individual index but not to over the plural indices. The score cannot be calculated accurately for the present purpose of document retrieval, since the latter term, the document frequency within document, is the value characteristic to each index and this value is accurately reflected to a further division of the index; while the former term, document frequency, is the value over the document ensemble and this value cannot be accurately transferred to each of the plural indices.

In addition, the capabilities of the indices may be enforced such that the document frequency over the document ensemble is stored in each index, however, this may gives rise to impractical result such as the reducing overall capability of the system, since contents have to be updated in all indices even when one document is additionally registered, for example.

In contrast, there has been disclosed another system, which is adapted to retrieve documents using plural indices, calculate a score for each index, and then merges the thus obtained scores simply in order of the magnitude of the score (Japanese Laid-Open Patent Application No. 11-265393).

The known systems and methods have thus been adapted to utilize the document frequency value obtained for each index during score calculation. These scores can therefore not be obtained accurately on the basis of document ensemble, to thereby give rise to difficulties in obtaining correct retrieval results.

Accordingly, it is an object of the present disclosure to provide an improved system and method for document retrieval, having most, if not all, of the advantages and features of similar employed systems and methods, while eliminating many of their disadvantages, in which the system and method are capable of obtaining correct retrieval results even if plural indices are used for the document retrieval.

The following description is a synopsis of only selected features and attributes of the present disclosure. A more complete description thereof is found below in the section entitled "Description of the Preferred Embodiments".

To achieve the foregoing and other objects, and overcome the disadvantages discussed above, a document retrieval system is provided, including

 index means for storing and managing plural indices, each of which contains an index unit for use in document retrieval and appearance information of the index unit and is generated for respective groups of documents divided to be currently retrieved;

 retrieval condition analyzing means for acquiring retrieval conditions, analyzing the retrieval conditions, dividing a retrieval character string contained in the retrieval conditions into index units, and representing the retrieval conditions in terms of a predetermined internal representation for each index;
retrieval means for specifying the documents containing the retrieval character string for each index in reference to the predetermined internal representation; and
merging means for merging retrieval results obtained in each of the plural indices, and generating final retrieval results.

According to another embodiment, a document retrieval system is provided, including

index means for storing and managing plural indices, each of which contains an index unit for use in document retrieval and appearance information of the index unit and is generated for respective groups of documents divided to be currently retrieved;
retrieval condition analyzing means for acquiring retrieval conditions, analyzing the retrieval conditions, dividing a retrieval character string contained in the retrieval conditions into index units, and representing the retrieval conditions in terms of a predetermined internal representation for each of the plural indices;
document frequency within document computing means for specifying documents containing the retrieval character string for each index in reference to the predetermined internal representation, calculating the term related to document frequency within document to be used for obtaining a score for each of the documents, and storing results from calculation into a node in the internal representation as interim results;
document frequency computing means, based on the interim results obtained by the document frequency within document computing means for each index, for calculating a document frequency as that of the documents in relative to all documents currently retrieved, which contain the retrieval character string appearing;
score computing means for calculating the final score using the document frequency obtained by the document frequency computing means for each of the plural indices; and
merging means for merging retrieval results obtained in each of the plural indices, and generating final retrieval results.

As a result of the present construction, the scores of retrieval character strings can be obtained for the present plural indices with the accuracy as high as that for a single index previously employed, and the proper ranking retrieval becomes feasible in the document retrieval system with the plural indices achieving comparable, accurate retrieval results.
In addition, the document retrieval system is characterized by several capabilities of the document frequency within document computing means such as, for example,

a first capability of instructing a distance operator to store the results obtained by the computing means as interim results, when the retrieval character string is longer than the index unit and when the internal representation is expressed by plural index unit nodes and by the distance operator for verifying requirement for the appearance location within document of the retrieval units;
a second capability of instructing an expansion operator to store results obtained by the computing means as interim results, when the retrieval character string is shorter than the index unit and when the internal representation is expressed by plural index unit nodes and by an expansion operator for aggregating frequency information within document on the index units;
a third capability of instructing an AND operator, contained in the predetermined internal representation, to make child nodes calculate terms related to the document frequency within document and aggregating the scores for child nodes being linked to an AND operator over documents satisfying all of the child nodes, when the retrieval conditions contain the AND operator;
a fourth capability of instructing an OR operator, contained in the predetermined internal representation, to makes child nodes calculate the terms related to a document frequency within document and aggregates scores for the child nodes being linked to the ANDNOT operator over documents satisfying a first child node but not a second child node; and
a fifth capability of instructing an OR operator, contained in the predetermined internal representation, to make child nodes calculate the terms related to the document frequency within document and aggregates scores for the child nodes being linked to an ANDNOT operator over the documents satisfying a first child node but not a second child node, when the retrieval conditions contain the ANDNOT operator.

Furthermore, the document retrieval system is additionally characterized by the capability of the document frequency within document computing means of making the conjunction operator to instruct the child nodes to calculate the term related to document frequency, when at least one document is found which corresponds to a conjunction operator; or by the capability of the document frequency computing means instructing the child node corresponding to the retrieval character string, which stores no interim results, to inquire on documents containing the retrieval character string, when at least one document which corresponds to the conjunction operator is found in the first index but not in the second index.

Alternatively, the document retrieval system is additionally characterized by the capability of the document frequency within document computing means making an ANDNOT operator instruct the child nodes to calculate the term related to document frequency, when at least one document is found which corresponds to the ANDNOT operator; or by the capability of the document frequency computing means instructing the child node corresponding to the retrieval character string, which stores no interim results, to inquire on the documents containing the retrieval character string, when at least one document which corresponds to the ANDNOT operator is found in the first index but not in the second index.

As a result of the present construction, the scores of retrieval character strings can be obtained accurately even in the case when the retrieval character string is processed under retrieval conditions of being linked to the logical operator, and the ranking retrieval is achieved properly.

In another embodiment, a method for document retrieval is provided, comprising the steps of

a first group including the steps of acquiring retrieval conditions, analyzing the retrieval conditions, dividing a retrieval character string contained in the retrieval conditions into index units, and representing the retrieval conditions in terms of a predetermined internal representation for each of the plural indices in use for retrieval consisting of documents divided to be currently retrieved;

a second group including the steps of specifying documents containing the retrieval character string for each of the plural indices in reference to the predetermined internal representation, calculating the term related to document frequency within document to be used for obtaining a score for each of the documents, and storing results from calculation into a node in the internal representation as interim results;

a third group including the step of calculating a document frequency as the frequency of the documents in relative to all documents currently retrieved, in which the retrieval character string appears, based on the interim results obtained by the steps of second group;

a fourth group including the step of calculating a final score using the document frequency obtained by the steps of third group for each of the plural indices; and

a fifth group including the steps of merging retrieval results obtained in each of the plural indices, and generating final retrieval results.

As a result of the present method, the scores of retrieval character strings can be calculated for the plural indices with the accuracy as high as that for the single index method previously employed, and the ranking retrieval becomes feasible achieving comparable, accurate retrieval results.

In yet another embodiment, a program storage device readable by a machine is provided, tangibly embodying a program of instructions executable by the machine to perform method steps for document retrieval. The method steps herein include

a first group of the steps of acquiring retrieval conditions, analyzing the retrieval conditions, dividing a retrieval character string contained in the retrieval conditions into index units, and representing the retrieval conditions in terms of a predetermined internal representation for each of the plural indices in use for retrieval consisting of documents divided to be currently retrieved;

a second group of the steps of specifying documents containing the retrieval character string for each of the plural indices in reference to the predetermined internal representation, calculating the term related to document frequency within document to be used for obtaining a score for each of the documents, and storing results from calculation into a node in the internal representation as interim results;

a third group of the step of calculating a document frequency as the frequency of the documents in relative to all documents currently retrieved, in which the retrieval character string appears, based on the interim results obtained by the steps of second group;

a fourth group of the step of calculating a final score using the document frequency obtained by the steps of third group for each of the plural indices; and

a fifth group of the steps of merging retrieval results obtained in each of the plural indices, and generating final retrieval results.

As a result of the present program storage device, the scores of retrieval character strings can be calculated for the plural indices with the accuracy as high as that for the single index method previously employed, and the ranking retrieval becomes feasible achieving comparable, accurate retrieval results.

In another embodiment, a computer program product is provided for use with a document retrieval system, which comprises a computer usable medium having computer readable program code means embodied in the medium for causing document retrieval steps. The computer readable program code means herein includes

index means for storing and managing plural indices, each of which contains an index unit for use in document retrieval and appearance information of the index unit, and is generated for respective groups of documents divided to be currently retrieved;

retrieval condition analyzing means for acquiring retrieval conditions, analyzing the retrieval conditions, dividing a retrieval character string contained in the retrieval conditions into index units, and representing the retrieval conditions in terms of a predetermined internal representation for each of the plural indices;

document frequency within document computing means for specifying documents containing the retrieval character string for each of the plural indices in reference to the predetermined internal representation, calculating the term related to document frequency within document to be used for obtaining a score for each of the documents, and storing results from the above calculation into a node in the internal representation as interim results;

document frequency computing means, based on the interim results obtained by the document frequency within document computing means for each index, for calculating a document frequency as the frequency of the documents in relative to all documents currently retrieved, in which the retrieval character string appear;

score computing means for calculating a final score using the document frequency obtained by the document frequency computing means for each of the plural indices; and

merging means for merging retrieval results obtained in each of the plural indices, and generating final retrieval results.

As a result of the present program storage device, the scores of retrieval character strings can be calculated for the plural indices with the accuracy as high as that for the single index method previously employed, and the ranking retrieval becomes feasible achieving comparable, accurate retrieval results.

Also disclosed in the present patent application are additional means and capabilities thereof provided in the document retrieval system such as

index means for storing and managing plural indices, which are each generated for respective groups of divided documents among those to be currently retrieved, and contain an index unit for use in retrieval, occurrence information of the index unit, and minimum and maximum document IDs (identifiers) for respective groups of the divided documents;

regular expression pattern document acquisition means for reading out documents previously registered in the registration section, and acquiring document identifiers of the documents containing regular expression patterns given by the retrieval section within the range of the minimum and maximum document identifiers; and

retrieval condition generation means, in case when the retrieval conditions are expressed by a retrieval requirement statement described in terms of the natural language, for implementing morphological analysis on the retrieval requirement statement, dividing the retrieval requirement statement into words, selecting an appropriate word among the noted words in use for retrieval based on a frequency of the words appearing in the documents in each of the plural indices, and generating the retrieval conditions including the selected word.

As a result of the noted additional means and capabilities thereof, the proper document retrieval can be achieved more effectively responding to detailed requirements by a user, for example, and achieving comparable, accurate retrieval results even using plural indices.

The present invention and features and advantages thereof will be more readily apparent from the following detailed description read in conjunction with the accompanying drawings, in which:

FIG. 1 is a block diagram illustrating the major components of the document retrieval system according to a first embodiment disclosed herein;

FIG. 2 is a block diagram illustrating the system configuration of the document retrieval system according to the first embodiment;

FIGS. 3A and 3B illustrate the first and second indices, respectively, according to the first embodiment;

FIG. 4 includes a flow chart illustrating operation steps in the. document retrieval method according to the first embodiment;

FIG. 5 illustrates the internal representation generated by the retrieval condition analyzing section according to the first embodiment;

FIGS. 6A and 6B illustrate the internal representations generated by the TF computing section in the first and second indices, respectively, according to a second embodiment disclosed herein;

FIGS. 7A and 7B illustrate the internal representations generated by the DF term computing section in the first and second indices, respectively, according to the second embodiment;

FIG. 8 illustrates the final results obtained from the ranking retrieval according to the second embodiment;

FIG. 9 illustrates one of the plural indices according to the second embodiment;

FIG. 10 includes a flow chart illustrating operation steps in the document retrieval method according to the second embodiment;

FIG. 11 illustrates the internal representation including the distance operator generated by the retrieval condition analyzing section according to the second embodiment;

FIG. 12 illustrates the internal representation generated by the TF computing section according to the second embodiment;

FIG. 13 illustrates the internal representation including the expansion operator generated by the retrieval condition analyzing section according to the second embodiment;

FIG. 14 includes a flow chart illustrating operation steps in the document retrieval method according a third embodiment disclosed herein;

FIG. 15 illustrates the internal representation generated by the retrieval condition analyzing section according to the third embodiment;

FIG. 16 illustrates the internal representation generated by the TF computing section according to the third embodiment;

FIG. 17 illustrates the internal representation generated by the DF computing section according to the third embodiment;

FIG. 18 includes a flow chart illustrating operation steps in the TF computing section according to a fourth embodiment disclosed herein;

FIG. 19 includes a flow chart illustrating operation steps in the DF computing section according to the fourth embodiment;

FIG. 20 is a block diagram illustrating the system configuration of the document retrieval system according to a fifth embodiment disclosed herein;

FIG. 21 illustrates the first and second indices, respectively, according to the fifth embodiment;

FIG. 22 includes a flow chart illustrating operation steps in the document retrieval method according the fifth embodiment;

FIG. 23 illustrates the internal representation generated by the retrieval condition analyzing section according to the fifth embodiment;

FIGS. 24A and 24B illustrate the internal representations generated by the retrieval section according to the fifth embodiment;

FIGS. 25A and 25B illustrate the first and second indices, respectively, without a maximum or minimum document ID according to the fifth embodiment;

FIG. 26 is a block diagram illustrating the system configuration of the document retrieval system according to a sixth embodiment disclosed herein;

FIG. 27 includes a flow chart illustrating operation steps in the document retrieval method according the sixth embodiment;

FIG. 28 illustrates the internal representation generated by the retrieval condition analyzing section according to the sixth embodiment;

FIG. 29 illustrates the internal representation generated by the pattern verification section according to the sixth embodiment;

FIG. 30 is a block diagram illustrating the system configuration of the document retrieval system according to a seventh embodiment disclosed herein;

and

FIG. 31 includes a flow chart illustrating operation steps in the document retrieval method according the seventh embodiment disclosed herein.

In the following description accompanied by several drawings, specific embodiments of the system and method for document retrieval are detailed, which is particularly useful for retrieving documents using the system incorporating plural indices.

It is understood, however, that the present disclosure is not limited to these embodiments. For example, the use of the system and method with program storage device and computer program product are capable of providing excellent capabilities of accurate document retrieval in other system configurations as well. Other embodiments will be apparent to those skilled in the art upon reading the following description.

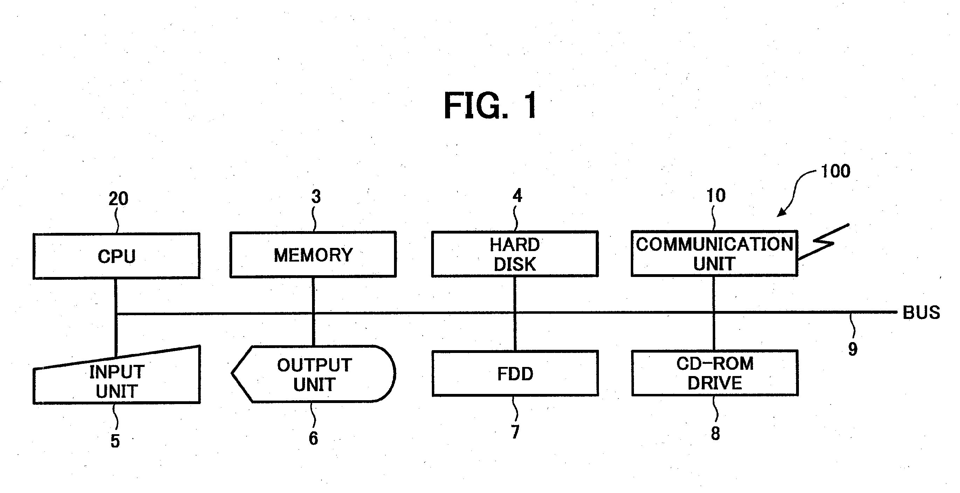

FIG. 1 is a block diagram illustrating the major components of the document retrieval system according to one embodiment disclosed herein. Referring to FIG. 1, the document retrieval system (computer) 100 includes at least a CPU 20 for assuming the overall control of the retrieval system; a memory 3 consisting of memory devices such as, for example, ROM and RAM, for storing programs and pertinent data for implementing various operations under the control of the CPU 20; a hard disk 4 for storing documents to be retrieved, conditions for retrieval, results from the retrieval and other similar information; an input unit 5 for inputting necessary instructions and pertinent data using pointing devices such as a keyboard and mouse; an output unit 6 consisting of a CRT (cathode ray tube), LC (liquid crystal) display, and other similar display devices; a flexible disk drive 7 (which is hereinafter referred to as FDD) for implementing writing (updating) and reading operations onto flexible disks (FD); a CD-ROM drive 8 for reading data out from compact disk read-only memory (CD-ROM); a communication unit 10 for controlling communication network by way of the interface thereof, and exchanging data and signals between other communication systems connoted by the communication network; and a bus 9 for interconnecting these units 3 through 8, 10 and 20.

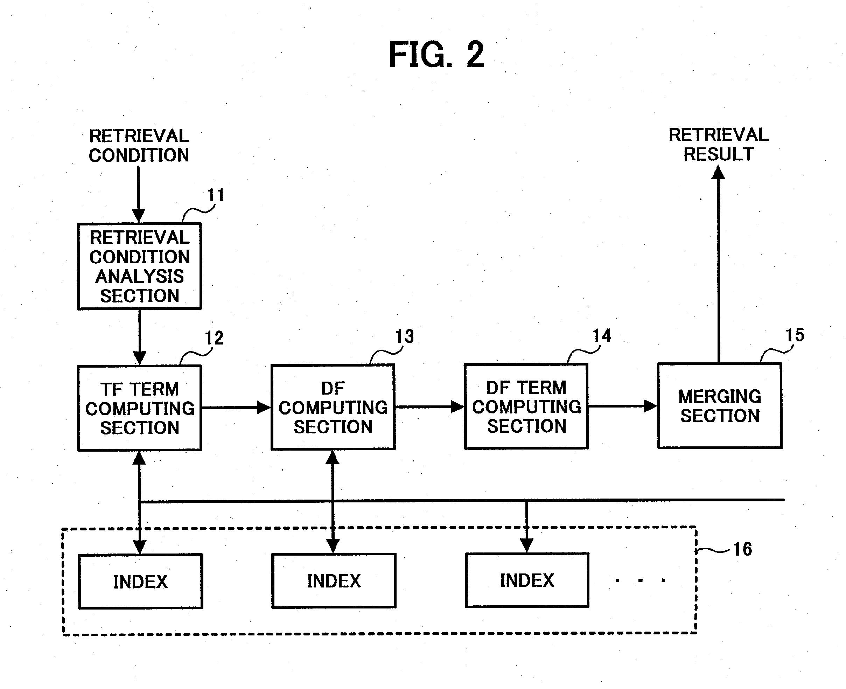

FIG. 2 is a block diagram illustrating the system configuration of the document retrieval system 1 disclosed herein, including at least several sections such as an index section 16, a retrieval condition analyzing section 11, a TF computing section 12, a DF computing section 13, a DF term computing section 14 and a merging section 15.

Referring to FIG. 2, the index section 16 includes plural indices for storing index by index a set of attributes for certain documents among a given set of the documents, which are specified by the occurrence therein of the index (included in search word) input by the input unit 5, for example. These operation steps with the index section 16 are enabled by the hard disk 4 and so on.

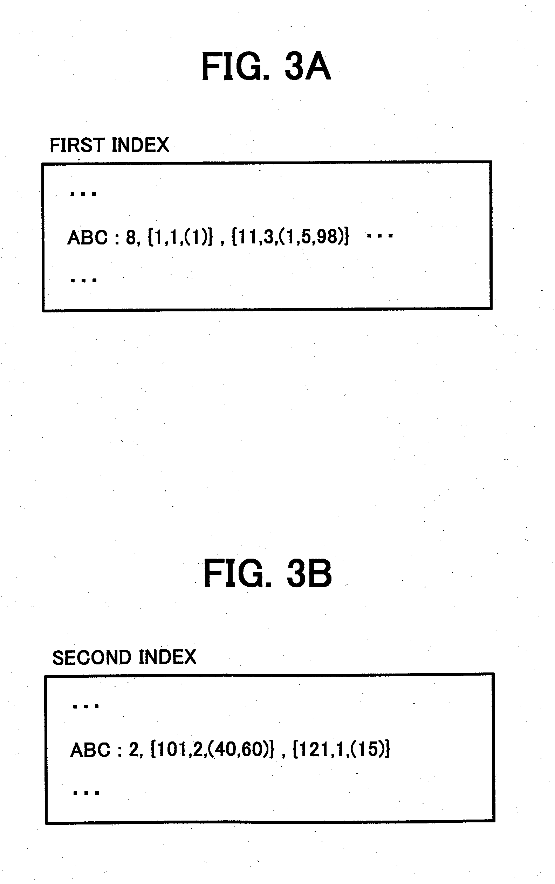

In addition, the index section 16 also generates a line for each index unit. As an illustration, the leading character string, ABC, denotes an index unit as shown in FIGS. 3A and 3B for the first and second indices, respectively.

The numeral next to the character string ABC in respective indices then denotes document frequency. This is illustrated also in FIG. 3A by the numeral 8 in the first index indicating the character string appears in eight documents, while the numeral 2 in the second index indicating the character string appears in two documents.

The numerals in each index headed by the document frequency consist of occurrence information for the character string ABC.

That is, the portion parenthesized by {} is allocated to denote several pieces of numerical information such as a document ID for identifying the document (an integer for designating the document), an occurrence frequency within the document for the character string ABC, and an occurrence location (indicating the offset from the beginning, given for each occurrence) again within the document for the character string.

For example, the numerical information or appearance information {1, 1, (1)} for the first column in the first index of FIG. 3A indicates the character string ABC appears once in the document having the document ID = 1 (i.e. in the first document) at the location designated by (1).

In a similar manner, the numerical information {11, 3, (1, 5, 98)} for the second column in the first index indicates the character string ABC appears three times in the document having the document ID = 11 at the location designated by (1, 5, 98).

In the second index as illustrated in FIG. 3B, it is indicated by the numerical information for the first column in the second index that the character string appears twice in the document having the document ID = 101 at the location designated by (40, 60), while from the numerical information for the second column in the second index it is indicated that the character string appears once in the document having the document ID = 121 at the location designated by (15).

The retrieval condition analyzing section 11 is configured to analyze retrieval conditions (including retrieval character strings and logical operators) input by the input unit 5 or input by way of a recording medium such as, for example, flexible disk and to generate a predetermined executable internal representation. The operation steps with the retrieval condition analyzing section 11 are enabled by the CPU 20, memory 3 and others.

The TF computing section 12 is configured to identify the documents containing the retrieval character string (containing index unit) in reference to the attributes stored the index section 16 and to calculate, document by document, the score related to document frequency within the document. These operation steps with the TF computing section 12 are enabled by the CPU 20, memory 3 and others.

The DF computing section 13 is configured to calculate the overall document frequency based on respective document frequencies previously obtained for the documents containing the retrieval character string by the TF computing section 12 index by index. The operation steps with the DF computing section 13 are enabled by the CPU 20, memory 3 and others.

The DF term computing section 14 is configured to calculate final scores based on the overall document frequency and the number of documents currently retrieves, calculated by the DF computing section 13. The operation steps with DF term computing section 14 are enabled by the CPU 20, memory 3 and others.

The merging section 15 is configured to merge the retrieval results obtained index by index by the DF term computing section 14, sort documents according to the order of the score, and obtain final retrieval results. The operation steps with the merging section 15 are enabled by the CPU 20, memory 3 and others.

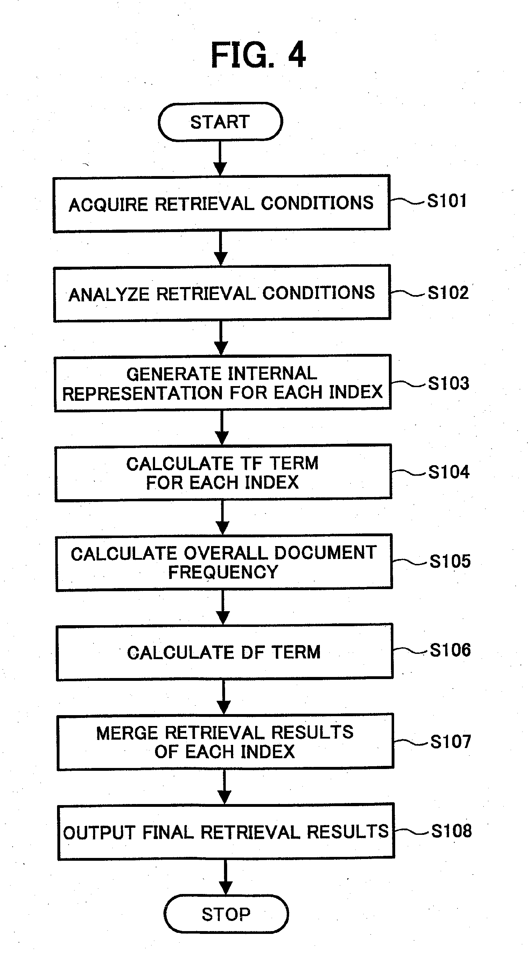

Referring to FIG. 4, operation steps for implementing the document retrieval will be detailed in the next place according to the present embodiment.

In the description which follows, the number of the index is assumed to be two for purposes of explanation (as illustrated in FIGS. 3A and 3B), since the steps for the case with three or more indices can be known by analogy with relative ease.

The retrieval condition analyzing section 11 acquires retrieval conditions input by, for example, the input unit 5 (step S101), and analyze and then identify the retrieval character string to be currently retrieved and logical operator (step S102). Subsequently, the retrieval condition analyzing section 11 examines whether this retrieval character string is dividable into the index unit ABC shown in FIGS. 3A and 3B.

If the retrieval character string is found dividable into the index unit, the string is subsequently divided, and the thus divided index unit ABC is combined with the logical operator, an internal representation in the tree structure is generated for each index unit (step S103).

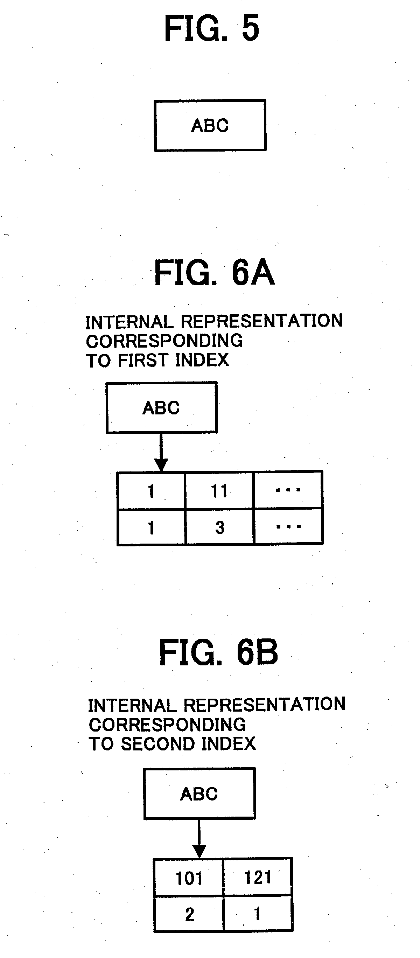

For example, if the character string ABC is contained and the logical operator is not contained among the retrieval conditions, an internal representation is generated, as shown in FIG. 5, having one node and denoting the index unit 'ABC'.

Subsequently, the TF computing section 12 processes index by index the internal representation generated by the retrieval condition analyzing section 11 (step S104).

Namely, the TF computing section 12 obtains two values for each node corresponding to the retrieval character string, one the ID of the documents, in which the retrieval character string appears, and the other the calculated results on the term related to the document frequency (TF) within document to be used for obtaining the score, and subsequently stores these values as interim results in the hard disk 4, for example.

The score is calculated using the following relation (1) conventionally known;

$$score(k) = tf(k) \{1 + \log 2 (N/ df(k))\} \qquad (1),$$

where tf(k) denotes the document frequency within document for the appearance of the retrieval character string k, df(k) the document frequency, and N the number of documents currently registered. In addition, tf(k) herein is the above noted term related to the document frequency (TF) within document to be used for obtaining the score.

As a result, the internal representation is obtained as shown in FIGS. 6A and 6B through the processing steps with TF computing section 12, in which the values in the upper and lower stands, each linked to the node ABC, are the obtained results for the document ID and TF term, respectively.

The DF computing section 13 then summates the number of documents related to the node previously obtained for each index, to thereby obtain overall document frequency (step S105). In the present example, since the numbers of the documents, in which the character string ABC appears, are eight and two in the first and second indices, respectively, the result of summation is 10(i.e., 8 + 2), indicating the character string appears in ten documents.

The DF term computing section 14 subsequently calculates the term related to the document frequency within document for obtaining the score (which is hereinafter referred to as DF term) using the overall document frequency obtained by the DF computing section 13, to thereby obtain final scores (step S106).

When the scores are calculated using the above note relation (1), the DF term is herein related to the expression {1 + log 2 (N/ df(k))}.

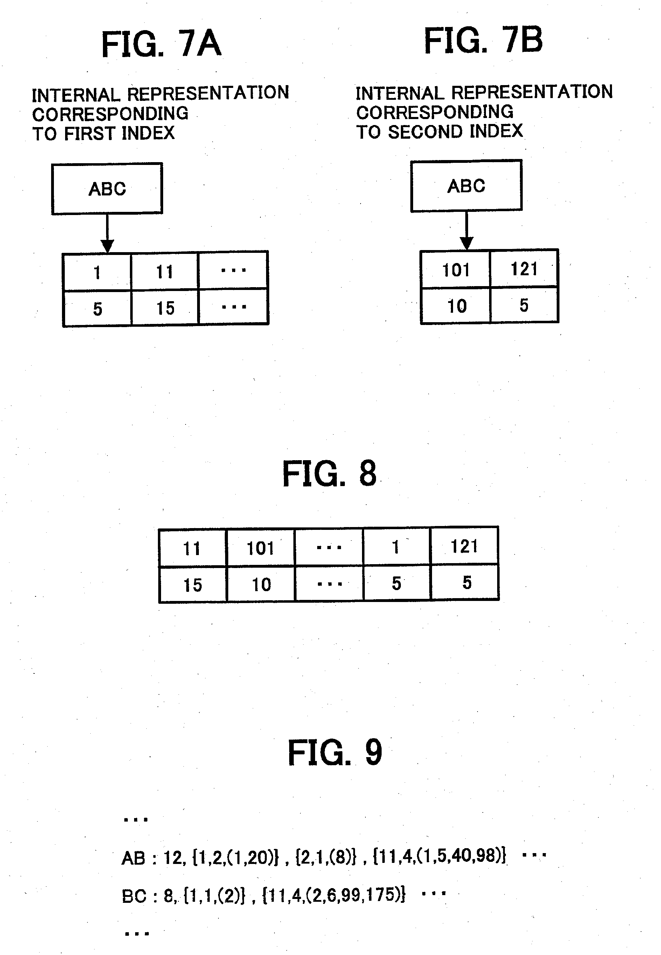

Assuming eighty documents are involved to be retrieved for each index in the present example, therefore, the DF term is obtained as (1 + log 2 (160/ 10) = 5. After taking the DF term result into consideration, the internal representation is obtained as FIGS. 7A and 7B for the first and second indices, respectively.

The merging section 15 subsequently merges the thus obtained results, to thereby generate the final retrieval results, and sort the results according to the order of magnitude of the score (step S107). In the present example, the final retrieval result is obtained as shown in FIG. 8, and subsequently output by the output unit 6.

As described herein above, the document retrieval system 100 according to the first embodiment disclosed herein is provided with several means for suitably implementing document retrieval, including

a index means (including the index section 16) for storing and managing plural indices which are each generated for respective groups of divided documents among those to be currently retrieved;
a retrieval condition analyzing means (including the retrieval condition analyzing section 11) for analyzing acquired retrieval conditions, dividing the retrieval character string contained in the retrieval conditions into index units, and transforming into internal representation including the index unit index by index;
a retrieval means (including the TF computing section 12, DF computing section 13, and DF term computing section 14) for specifying the documents corresponding to the retrieval conditions; and
a merging means (including the merging section 15) for merging retrieval results for each index, to thereby generate final retrieval results.

As a result, the scores of retrieval character strings can be obtained for a plurality of indices with higher accuracy, and the accuracy in the ranking retrieval can therefore be improved.

According to another aspect, the document retrieval system 100 according to the present embodiment is provided with several means for suitably implementing document retrieval, including

an index means (including index section 16) for storing and managing plural indices for use in the document retrieval, which are each generated for respective groups of divided documents among those to be currently retrieved;
a retrieval condition analyzing means (including retrieval condition analyzing section 11) for analyzing retrieval conditions, dividing the retrieval character string contained in the retrieval conditions into index units, and transforming into internal representation including the index unit index by index;
a document frequency within document computing means (including TF computing means 12) for identifying the documents containing the retrieval character string, calculating the term related to the document frequency within document to be used for obtaining the score for each document, and storing the results from the calculation into the node in the internal representation as interim results;
a document frequency computing means (including DF computing section 13) for calculating the frequency of the documents, in which the retrieval character string appears, in relative to all documents currently retrieved, using the interim results obtained by TF computing means 12 for each index;
a score computing means (including DF term computing section 14) for calculating final scores using overall document frequency obtained by the DF computing section 13 for each index; and
a merging means (including merging section 15) for merging the retrieval results obtained index by index, sorting documents according to the order of the score, if necessary, and acquiring final retrieval results.

As a result, the scores of retrieval character strings can be obtained with the present construction including plural indices with the accuracy as high as that for a single index previously employed, and the proper ranking retrieval becomes feasible in the document retrieval system with the plural indices achieving comparable, accurate retrieval results.

According to still another aspect, the document retrieval system 100 according to the present embodiment is configured to implement a document retrieval method, including several steps such as

the steps S102 and S103 for analyzing retrieval conditions, dividing the retrieval character string contained in the retrieval conditions into index units, and transforming into internal representation including the index unit, for each of the plural retrieval indices with respect to each of groups formed in advance by diving the documents to be currently retrieved;

the step S104 for identifying the documents containing the retrieval character string, calculating the term related to the document frequency within document to be used for obtaining the score for each document, and storing the results from the calculation into the node in the internal representation as interim results;

the step S105 for calculating the frequency of the documents, in which the retrieval character string appears, in relative to all documents currently retrieved, using the interim results obtained in the step S104 for each index;

the step S106 for calculating final scores using overall document frequency obtained by the DF computing section 13 for each index;

the step S107 for merging the retrieval results obtained index by index, sorting documents according to the order of the score, if necessary, and acquiring final retrieval results.

As a result, the scores of retrieval character strings can be obtained for a plurality of indices with higher accuracy, and the proper ranking retrieval becomes feasible.

While the document retrieval method according to the present embodiment has been described herein above (including FIG. 4) in the case where several programs for implementing the method are stored in the memory device 3, the method may alternatively be performed by means of the programs stored into other memory devices than the memory device 3, in that the document retrieval system 100 is formed suitably incorporating computer readable recording media including CD-ROM, FD, magneto optical disk (MO), mini disk (MD) and rewritable CD-ROM (CD-RW).

The pertinent programs are readout from the media by CD-ROM drive 8 or FDD 7, for example, and subsequently executed, to thereby be able to yield similar satisfactory results. With this construction of the retrieval system, the programs can be updated with relative ease by displacing and/ or exchanging the recording media.

In addition, while the document retrieval method has been also described herein above (including FIG. 4) utilizing several programs stored in the memory device 3, the method may alternatively be implemented using the programs which are downloaded from external means on the network such as LAN (local area network) by way of the communication unit 10 including a communication interface such as the network interface and then stored into the memory device 3, to thereby be able to yield similar satisfactory results.

With the present construction of the retrieval system, the programs can be updated with relative ease by way of the network.

Referring again to FIGS. 1 and 2, a further document retrieval system will be described according to the second embodiment disclosed herein.

Since the present document retrieval system has broadly a similar hardware construction and operational configuration to those described in the previous embodiment, these drawings FIGS. 1 and 2 are also used herein and the same reference numerals represent the same or like elements.

In the present embodiment, a retrieval character string is divided into index units, and the index units are each divided into the groups of n neighboring (or continuous) characters, i.e., n-gram. Each of the groups of the n continuous characters is then utilized as an index unit, that is known as the n-gram retrieval as detailed in Japanese Laid-Open Patent Application No. 2000-337989, for example.

To be more specific, the bi-gram retrieval is utilized using two continuous characters as an index unit in the present embodiment, so as to identify the documents containing the retrieval character string by the bi-gram retrieval, calculate the score related to document frequency within the document for each document, and obtain the final score using the number of documents obtained in the first phase as the document frequency.

As illustrated in FIG. 9, the retrieval character string ABC contained in retrieval condition is divided into 'AB' and 'BC', and subsequently registered in the index section 16 index by index.

The numeral next to the character strings 'AB' and 'BC' in respective indices (the first index, second index, etc) denotes document frequency. This is illustrated also in FIG. 9 by the numeral 12 in the first index indicating the character string 'AB' appears in twelve documents, while the numeral 8 in the second index indicating the character string 'BC' appears in eight documents.

In addition, the portion parenthesized by {} following the document frequency is allocated to denote several pieces of occurrence information for each document.

Namely, there included in the parenthesized portion are several pieces of numerical information such as a document ID for identifying the document (an integer for designating the document), an occurrence frequency within the document for the character groups 'AB' and 'BC', and an occurrence location for respective character strings in each document (indicating the offset from the beginning, given for each occurrence).

For example, the numerical information {1, 2, (1, 20)} in the first column of FIG. 9 for the character group 'AB' indicates the character group 'AB' appears twice in the document having the document ID = 1 (i.e. in the first document) at the location designated by (1, 20).

In a similar manner, the numerical information {2, 1, (8)} for the second column in the first index indicates the character group 'AB' appears once in the document having the document ID = 2 at the location designated by (8).

For the second character group 'BC', by contrast, it is indicated by the numerical information for the first column in the second index that the character group appears once in the document having the document ID = 1 at the location designated by (2), while from the numerical information for the second column in the second index it is indicated that the character group 'BC' appears four times in the document having the document ID = 11 at the location designated by (2, 6, 99, 175).

Therefore, by finding out the specific combination of the character groups 'AB' and 'BC' within one document, in which the second character group 'BC' is located being shifted by one character from the first group 'AB', the document containing the character string 'ABC' can be specified and the frequency information for this document can be obtained, accordingly.

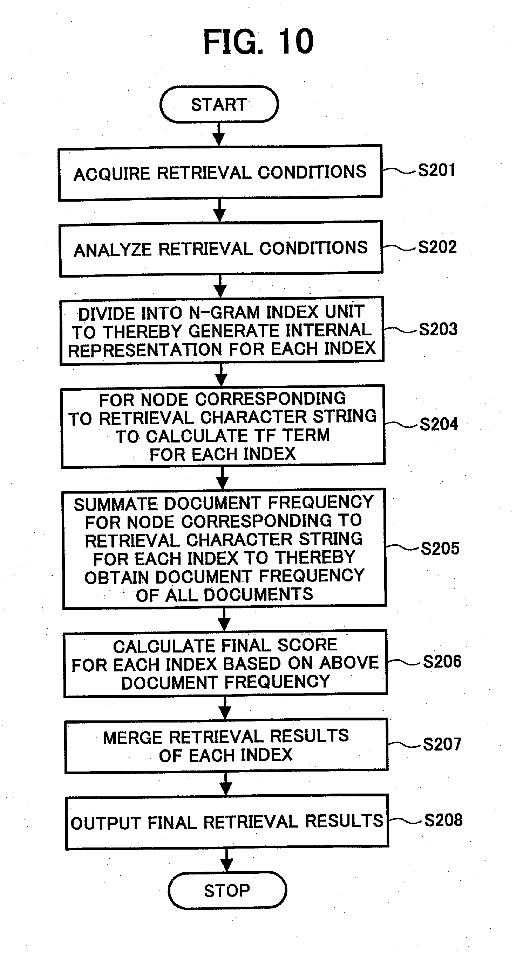

Referring now to FIG. 10, the retrieval process will be detailed herein below on the above noted steps according to the present embodiment.

The retrieval condition analyzing section 11 acquires retrieval conditions input by, for example, the input unit 5 (step S201), and analyze and then identify the retrieval character string to be currently retrieved (step S202).

Subsequently, the retrieval condition analyzing section 11 divides the retrieval character string into index unit having the form of the n-gram which is subsequently combined with the logical operator, and an internal representation in the tree structure is generated for each index (step S203).

The retrieval character string 'ABC' is herein contained in the retrieval conditions, the retrieval condition analyzing section 11 divides the retrieval character string into index units of the form of bi-gram, the first and second character groups, 'AB' and 'BC', respectively.

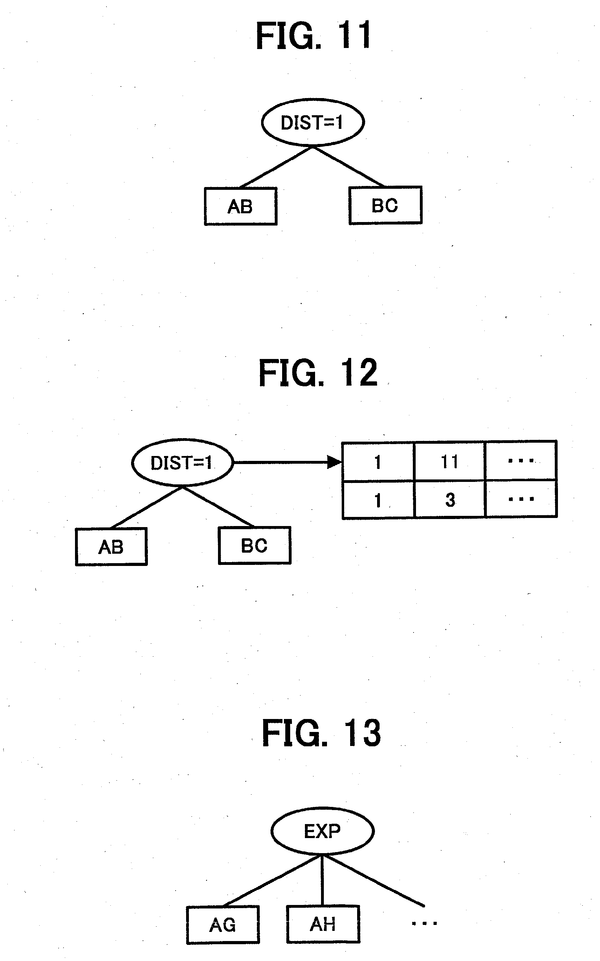

In addition, an internal representation is formed in both indices as shown in FIG. 11 such that two child nodes respectively representing the first and second character groups, 'AB' and 'BC', linked with the operator "dist=1". The elongated circle represented by "dist=1" is also shown in FIG. 11, which is the distance operator for verifying that the two child nodes are spatially apart one another in the document (i.e., they appear being displaced one another by one character in a document).

Subsequently, the TF computing section 12 processes index by index the internal representation generated by the retrieval condition analyzing section 11 (step S204).

Namely, the TF computing section 12 obtains two values for each node corresponding to the retrieval character string, one being the ID of the documents, in which the retrieval character strings 'AB' and 'BC' in respective indices appear, and the other the calculated results on the term related to the document frequency (TF) within document to be used for obtaining the score, and subsequently stores these values as interim results in a RAM, for example.

In addition, it may be added that tf(k) is the term related to the document frequency within document, described earlier, when the score is calculated using the relation (1).

As a result, the internal representation is obtained as shown in FIG. 12 through the processing steps with TF computing section 12, in which the interim results (including the document ID and the TF term related to score) are stored being linked not to index unit (which are two low end nodes in the present case) but to the distance operator.

The DF computing section 13 then processes the interim results stored being linked to the distance operator, and summate the number of documents related to the node previously obtained for each index, to thereby obtain overall document frequency with respect two indices in the present case (step S105).

The DF term computing section 14 subsequently processes the interim results linked to the distance operator connecting the low end nodes using the document frequency obtained by the DF computing section 13 (together with the number of all documents currently retrieved), and calculate the term related to the document frequency within document for obtaining the score (which is hereinafter referred to as DF term), to thereby obtain final scores (step S206).

When the scores are calculated using the above note relation (1), the DF term is herein related to the term {1 + log 2 (N/ df(k))}.

The merging section 15 subsequently acquires retrieval results for each index based on the processed results obtained by the TF computing section 12, DF computing section 13 and DF term computing section 14, and to merge the thus obtained results, to thereby generate the final retrieval results (step S207), and sort the results according to the order of magnitude of the score to subsequently output to the output unit 6 (step S208).

In case when a retrieval character string in the n-gram retrieval is found shorter than the index unit, the frequency information can be obtained by expanding the retrieval character string utilizing units prefix searched to agree with the retrieval character, and considering the document containing any of the noted units as retrieval result.

For example, the retrieval condition analyzing section 11 generates the internal representation shown in FIG. 13, where the elongated circle represented by "exp" is the expansion operator for specifying the documents containing any of child nodes corresponding to the n-gram of the index unit.

This expansion operator has a similar function to the OR operator in the manner of specifying the resultant group, that is, the operator functions to acquire frequency information of the retrieval character string based on occurrence information of child nodes, and then calculate scores using the thus acquired frequency information. In the case of OR operator, the summation of the values calculated by the child nodes is considered as the score by the OR operator.

In addition, the expansion operator is equivalent to the distance operator "dist=1", since the former operator factions to store interim results during the ranking retrieval process, calculate by TF computing section 12, DF computing section 13, DF term computing section 14 and merging section 15.

As described herein above, the document retrieval system 100 according to the second embodiment disclosed herein is provided with the retrieval means (including TF computing section 12), which is configured to store the results obtained by the TF computing section 12 as interim results being linked to the distance operator, in case when the retrieval character string is found longer than the index unit, and when internal representation is expressed by plural index unit nodes, and also by the distance operator for verifying the requirement for the appearance location within the document of the retrieval units.

As a result, the scores of retrieval character strings can be obtained accurately for the plural indices even in the case where the retrieval character string is divided into plural index units and then processed, and the ranking retrieval is attained properly.

In addition, the document retrieval system 100 according to the present embodiment is provided with the retrieval means (including TF computing section 12), which is configured to store the results obtained by the TF computing section 12 as interim results being linked to the expansion operator, in case where the retrieval character string is found shorter than the index unit, and where internal representation is expressed by plural index unit nodes, and also by the expansion operator for aggregating frequency information within document on the index units.

As a result, the scores of retrieval character strings can be obtained accurately for the plural indices even in the case where the retrieval character string is divided into plural index units and then processed, and the ranking retrieval is attained properly.

While the document retrieval method according to the present embodiment has been described herein above (including FIG. 10) in the case where several programs for implementing the method are stored in the memory device 3, the method may alternatively be performed by means of the programs stored into other memory devices than the memory device 3, in that the document retrieval system 100 is formed suitably incorporating computer readable recording media including CD-ROM, FD, magneto optical disk (MO), mini disk (MD) and rewritable CD-ROM (CD-RW).

The pertinent programs are readout from the media by CD-ROM drive 8 or FDD 7, for example, and subsequently executed, to thereby be able to yield similar satisfactory results. With this construction of the retrieval system, the programs can be updated with relative ease by displacing and/ or exchanging the recording media.

In addition, while the document retrieval method has been also described herein above (including FIG. 10) utilizing several programs stored in the memory device 3, the method may alternatively be implemented using the programs which are downloaded from external means on the network such as LAN by way of the communication unit 10 including a communication interface such as the network interface and then stored into the memory device 3, to thereby be able to yield similar satisfactory results.

With this construction of the retrieval system, the programs can be updated with relative ease by way of the network.

Referring again to FIGS. 1 and 2, anther document retrieval system will be described according to the third embodiment disclosed herein.

Since the present document retrieval system has broadly a similar hardware construction and operational configuration to those described in the previous embodiments, these drawings FIGS. 1 and 2 are also used herein and the same reference numerals represent the same or like elements.

The present system and method for the document retrieval are primarily related to those with retrieval conditions including logical operators.

As to the logical operators, there included are the AND operator which functions to acquire the document as the retrieval result for the operation, in which the document satisfies all of child nodes; OR operator which functions to acquire the document as the retrieval result for the operation, in which the document satisfies anyone of child nodes; and ANDNOT operator which has two nodes, and which functions to acquire the document as the retrieval result for the operation, in which the document satisfies the first child node but not the second child node.

In addition, the scores for respective logical operators are conventionally given by the sum of scores of the child nodes for AND and OR operators, and by the score of the first child node for ANDNOT operator.

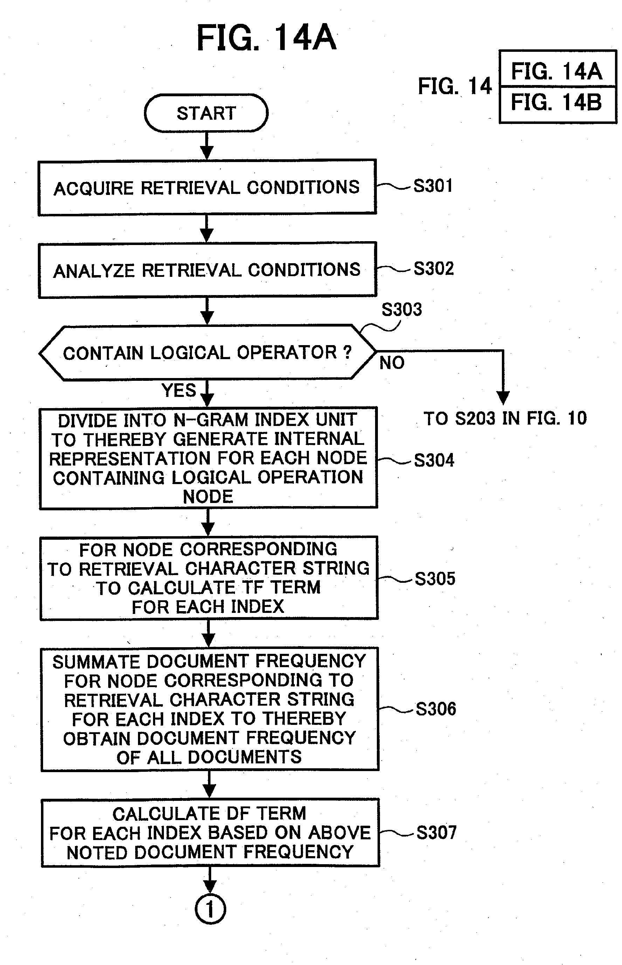

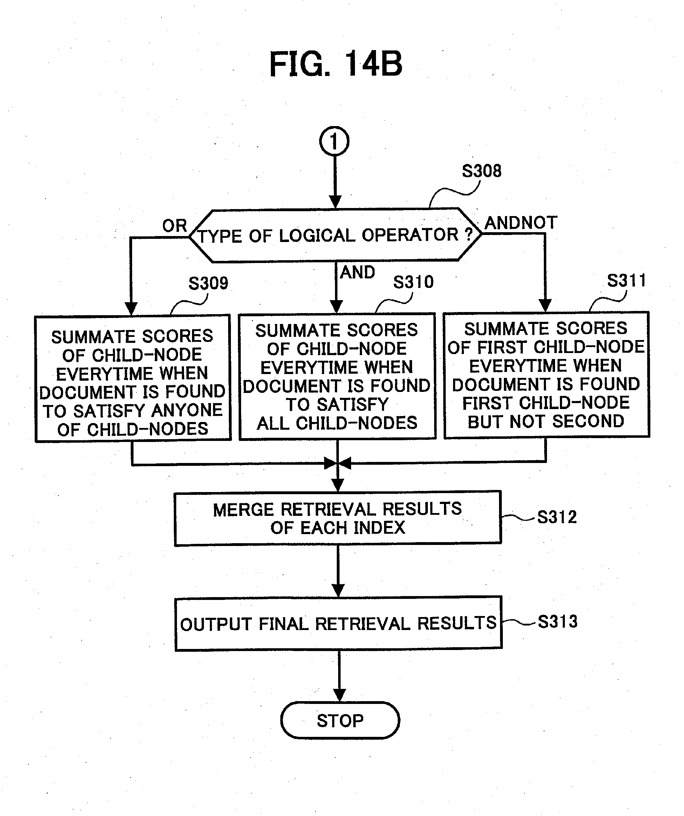

Referring to FIG. 14, operation steps for implementing the document retrieval will be detailed according to the second embodiment.

In the description which follows, the ranking retrieval is implemented for two indices under retrieval conditions including the characters 'ABC & DEF' with AND operator.

The retrieval condition analyzing section 11 then acquires the retrieval condition 'ABC & DEF' input by, for example, the input unit 5 (step S301), and analyze and then identify a character string 'ABC', another character string 'DEF' and logical operator '&'.

Subsequently, in order to utilize the bi-gram retrieval in a similar manner to the second embodiment, the retrieval condition analyzing section 11 divides the character string 'ABC' into character groups as retrieval units, a first character group 'AB' and second character group 'BC', and further to divide the character string 'DEF' into third character group 'DE' and fourth character group 'EF' (step S302).

The thus formed character groups, first through fourth groups, are respectively registered into indices (two indices in the present case) in the index section 16.

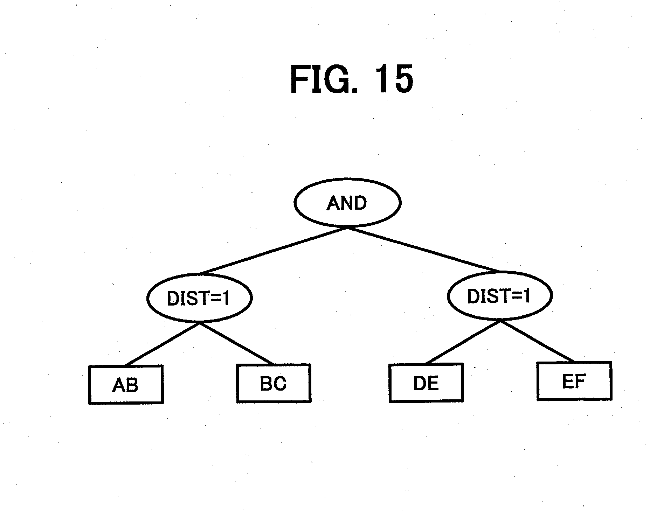

The retrieval condition analyzing section 11 subsequently generates an internal representation in the tree structure for each index unit as shown in FIG. 15 (steps S303 and S304).

Namely, by taking the first through fourth character groups as the first through fourth child nodes, respectively, the retrieval condition analyzing section 11 links the first and second child nodes by means of the distance operator "dist=1", link the third and fourth child nodes again by means of the distance operator "dist=1", and further link these two distance operators by means of the logical operator '&'.

The elongated circles shown in FIG. 15, each represented by "dist=1" are each distance operators for verifying that the first and second child nodes are spatially apart one another in the document by one character, and that the third and fourth child nodes are also apart one another by one character.

Subsequently, the TF computing section 12 processes index by index the internal representation in the tree structure generated by the retrieval condition analyzing section 11 (step S305).

Namely, the TF computing section 12 obtains two values for each index and for each of the nodes corresponding to the retrieval units of the retrieval character strings, ABC and DEF, one being the ID of the documents, in which the index units appear, and the other the calculated results on the term related to the document frequency (TF) within document to be used for obtaining the score, and subsequently stores these values as interim results in the hard disk, for example.

In addition, it may be added that tf(k) is the term related to the document frequency within document, described earlier, when the score is calculated using the relation (1).

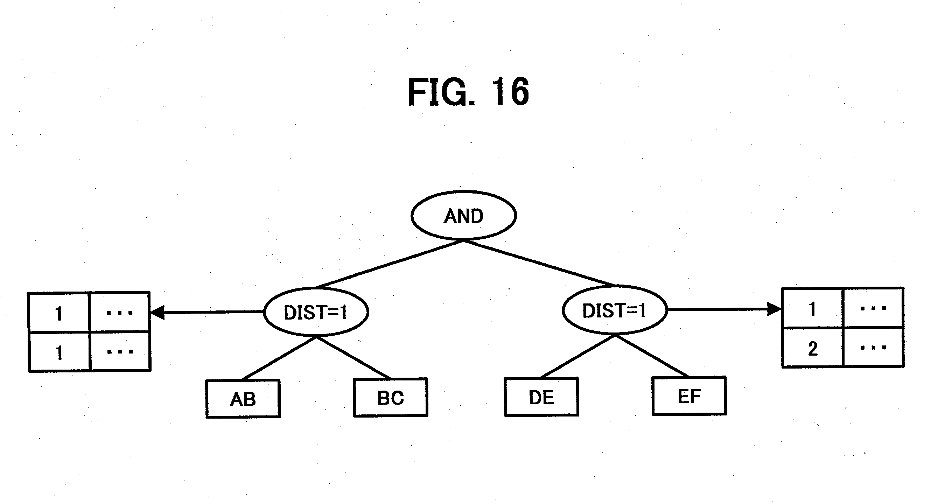

Furthermore, the internal representation is obtained as shown in FIG. 16 through the processing steps with TF computing section 12, in which the interim results are stored by not the logical operator '&', but the distance operator "dist=1 ".

In the TF computing section 12 included in the present structure, therefore, the logical operators can be considered to assume the function of transmitting the instructions to the child nodes on implementing the TF term calculation during the process steps from root leading to leaf along the internal representation.

The DF computing section 13 then summates the number of documents related to the nodes for each index, to thereby obtain overall document frequency (step S306).

For example, by assuming the occurrence of the character strings to be in eight documents for 'ABC' and in two documents for 'DEF' in the first index, and in two documents for 'ABC' and in three documents for 'DEF' in the second index, the document frequencies are obtained as 8 + 2 = 10, and 2 + 3 = 5 for the character string 'ABC' and 'DEF', respectively.

The DF term computing section 14 subsequently calculates the term related to the document frequency within document for obtaining the score (which is hereinafter referred to as DF term) using the overall document frequency obtained by the DF computing section 13, to thereby obtain final scores (step S106).

When the scores are calculated using the above note relation (1), the DF term is herein related to the expression $\{1 + \log 2 (N/ df(k))\}$.

In addition, by specifying the documents which satisfy all child nodes (including index unit node and distance operator) by means of the logical operator 'AND', the sum of the scores are then calculated for each of the above specified documents (steps S308 and S310).

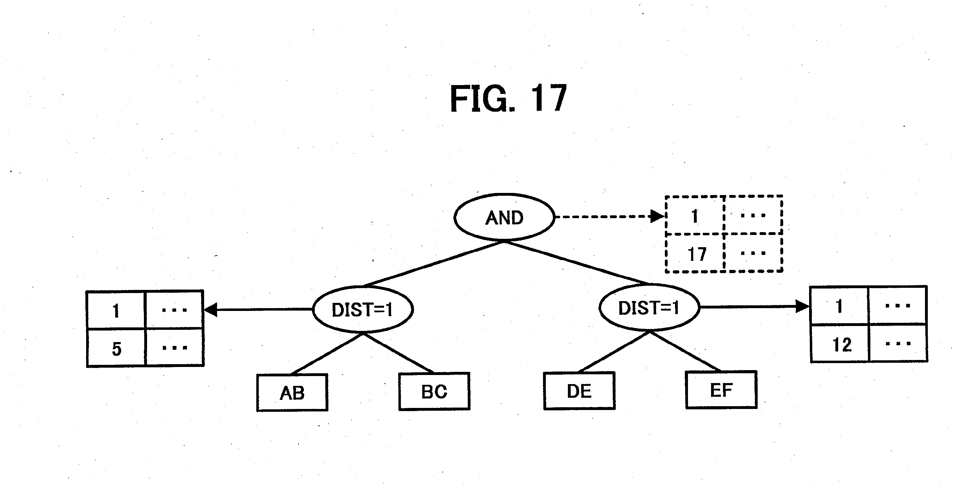

After taking the DF term result into consideration, the internal representation is thus obtained as shown in FIG. 17.

In the case where the OR operator is utilized with DF term computing section 14 (step S308), by specifying the documents which satisfy anyone of child nodes, the sum of the score for each node are then calculated every time when the documents are specified (step S309).

In contrast, in the case where the ANDNOT operator is utilized with DF term computing section 14 (step S308), by specifying the documents which satisfy the first child node but not the second child node, the score for the first node is acquired and then temporarily stored every time when the documents are specified (step S311).

The merging section 15 subsequently merges retrieved results of the root nodes, to thereby generate the final retrieval results, and sort the results according to the order of magnitude of the score (step S312).

In the present example, the portion, which is linked to the logical operator 'AND' as illustrated by the table surrounded by dotted lines as shown in FIG. 17, is subsequently output by the output unit 6 (step S313).

As described herein above, the document retrieval system 100 according to the present embodiment is provided with the document frequency computing means(including TF computing section 12) which is configured to operate, in case where retrieval conditions include the conjunction operator, such that the conjunction operator, contained in the predetermined internal representation, instructs the child node to calculate the term related to the document frequency within document, and that the scores for the child nodes are linked to the conjunction operator for the documents satisfying all of child nodes.

As a result, the scores of retrieval character strings can be obtained accurately even in the case where the retrieval character string is processed under retrieval conditions of the retrieval character strings combined by the logical operator, and the ranking retrieval is attained properly.

In addition, the document retrieval system 100 according to the present embodiment is provided with the document frequency computing means which is configured to operate, in case where retrieval conditions include the disjunction operator, such that the disjunction operator, contained in the predetermined internal representation, instructs the child node to calculate the term related to the document frequency within document, and that the scores for the child nodes are linked to the disjunction operator for the documents satisfying anyone of the child nodes.

As a result, the scores of retrieval character strings can be obtained accurately even in the case where the retrieval character string is processed under retrieval conditions of being combined by the logical operator, and the ranking retrieval is attained properly.

Further, the document retrieval system 100 according to the present embodiment is provided with the document frequency computing means which is configured to operate, in case where retrieval conditions include the ANDNOT operator, such that the ANDNOT operator instructs the child node to calculate the term related to the document frequency within document, and that, for the documents which satisfy the first child node but not the second child node, the score for the first child node is stored by the ANDNOT operator.

As a result, the scores can be obtained accurately even in the case where the retrieval character string is processed under retrieval conditions of being combined by the logical operator, and the ranking retrieval is attained properly.

While the document retrieval method according to the present embodiment has been described herein above (including FIG. 14) in the case where several programs for implementing the method are stored in the memory device 3, the method may alternatively be performed by means of the programs stored into other memory devices than the memory device 3, in that the document retrieval system 100 is formed suitably incorporating computer readable recording media including CD-ROM, FD, magneto optical disk (MO), mini disk (MD) and rewritable CD-ROM (CD-RW).

The pertinent programs are readout from the media by CD-ROM drive 8 or FDD 7, for example, and subsequently executed, to thereby be able to yield similar satisfactory results. With this construction of the retrieval system, the programs can be updated with relative ease by displacing and/ or exchanging the recording media.

Moreover, while the document retrieval method has also been described herein above (including FIG. 14) utilizing several programs stored in the memory device 3, the method may alternatively be implemented using the programs which are downloaded from external means on the network such as LAN by way of the communication unit 10 including a communication interface such as the network interface and then stored into the memory device 3, to thereby be able to yield similar satisfactory results.

With this construction of the retrieval system, the programs can be updated with relative ease by way of the network.

Referring again to FIGS. 1 and 2, a further document retrieval system will be described according to the fourth embodiment disclosed herein.

Since the present document retrieval system has broadly a similar hardware construction and operational configuration to those described in the previous embodiments, these drawings FIGS. 1 and 2 are also used herein and the same reference numerals represent the same or like elements.

The present system and method for the document retrieval are primarily related to those with retrieval conditions including logical operators such as AND and ANDNOT, and also related to the ranking retrieval operations with respect to two indices.

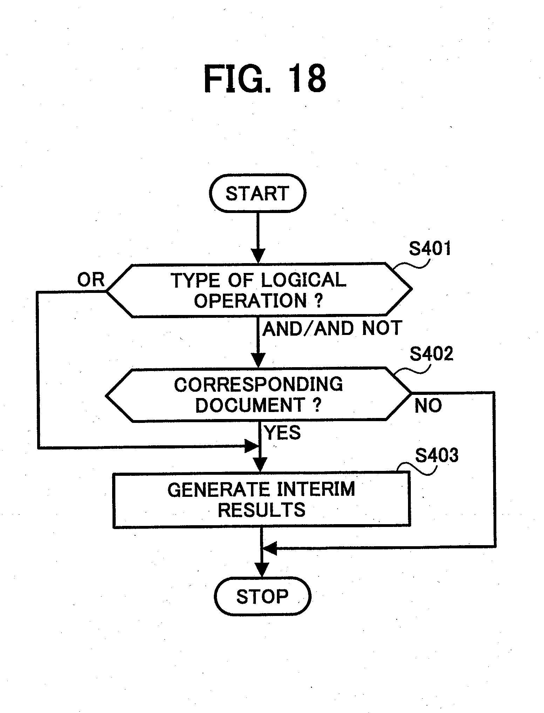

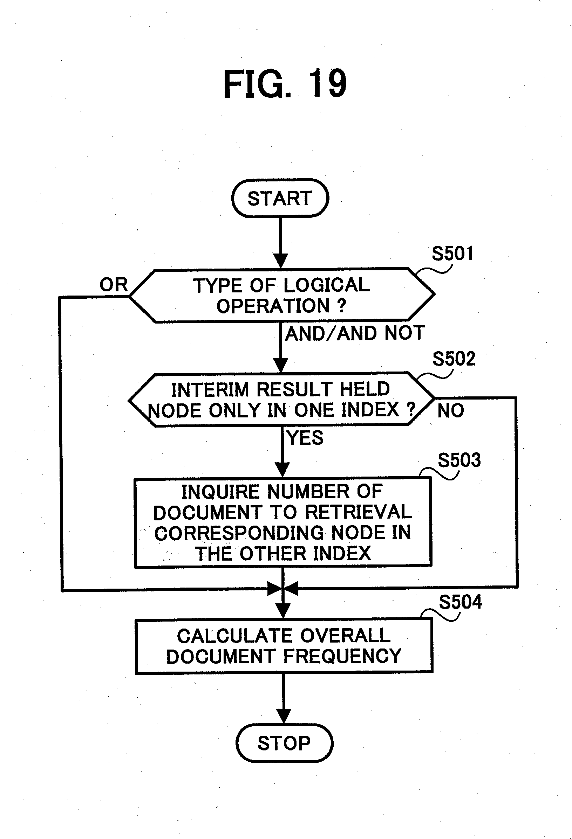

Referring particularly to FIGS. 18 and 19 of the drawings, the present embodiment will be detailed herein below, in which FIG. 18 includes a flow chart illustrating operation steps of the TF computing section, and FIG. 19 includes a flow chart illustrating operation steps of the DF computing section, according to the fourth embodiment disclosed herein.

The retrieval condition analyzing section 11 acquires the retrieval conditions input by, for example, the input unit 5, and analyze and then identify a character string and logical operator, contained in the retrieval conditions.

Subsequently, in order to utilize the n-gram retrieval in a similar manner to the third embodiment, the retrieval condition analyzing section 11 divides the index unit into n-character groups.

The thus formed n-character groups are registered into indices (two indices as aforementioned) in the index section 16. Furthermore, the retrieval condition analyzing section 11 generates an internal representation in the tree structure for each index unit according to the retrieval conditions.

Subsequently in a similar manner to the third embodiment, the TF computing section 12 processes index by index the internal representation in the tree structure generated by the retrieval condition analyzing section 11. Namely, the TF computing section 12 determines whether AND operator is contained in the internal representation of the tree structure (step S401).

If the AND operator is contained, TF computing section 12 determines whether at least one document is present which corresponds to the AND operator (step S402). If the presence of at least one such corresponding document is confirmed, the section 12 instructs the child nodes of the AND operator to generate interim results, in which the above noted child nodes correspond to "dist=1" of FIG. 16 (step S403).

It may be noted the presence of the noted at least one document corresponding to the AND operator can be determined, for example, by making each child node to inquire document by document in ascending order of the document ID number whether such a document is found, and by finding out whether all child nodes reply the same document ID number.

Since no score calculation involving the child node is needed for the above noted inquiry process, the number of process steps can be reduced compared with the process generating interim results by the child node.

Alternatively, the TF computing section 12 determines whether ANDNOT operator is contained in the internal representation of the tree structure (step S401).

If the ANDNOT operator is contained, TF computing section 12 determines whether at least one document is present which corresponds to the ANDNOT operator (step S402). If the presence of at least one such corresponding document is confirmed, the section 12 instructs the child nodes of the ANDNOT operator to generate interim results (step S403).

In this context, it may be noted the presence of the noted at least one document corresponding to the ANDNOT operator can be determined, for example, by making the first child node to inquire document by document in ascending order of the document ID number whether such a document is found, and by finding out the second child node does not conform with the second child node.

Alternatively, in case where no document is found to correspond to the first child node, the second child node may be instructed to generate interim results only when the presence of document corresponding to the first child node is confirmed, since no document is found to conform with the ANDNOT operator even after some documents are found to correspond to the second child node.

The TF computing section 12 functions to obtain two values in the case where the AND and ANDNOT operators are contained in retrieval conditions, one value being the ID of the documents, in which the retrieval character string appears, and the other the calculated results on the term related to the document frequency (TF) within document to be used for obtaining the score, and subsequently stores these values as interim results in the RAM, for example.

In addition, it may be noted that tf(k) is the term related to the document frequency within document, described earlier, when the score is calculated using the relation (1).

Furthermore, it is not the logical operator '&' (which corresponds to "and" of FIG. 16) but the node corresponding the retrieval character string (i.e., distance operator "dist=1") which stores the interim results.

In the TF computing section 12 included in the present structure, therefore, the logical operators can be considered to assume the function of transmitting the instructions to the child nodes on implementing the TF term calculation during the process steps from root leading to leaf along the internal representation.

The DF computing section 13 then summates the number of documents related to the nodes for each index, to thereby obtain overall document frequency, which is related to the two indices in the present case (step S501).

For example, in case when the AND operator is contained in the internal representation of the tree structure (step S501) and when the node corresponding to retrieval character string, by which the interim results are stored, is contained only in one index (step S502), the number of documents, in which the retrieval character string is contained, is inquired to the node in the other index corresponding to the same retrieval character string (step S503), and then overall document frequency is calculated (step S504).

Incidentally, the noted number of documents, in which the retrieval character string is contained, can be obtained relative ease by means of the simple retrieval (Boolean retrieval) performed by the above nodes for specifying the documents containing the retrieval character string.

The above noted method for DF calculation is quite effective in the case illustrated in Table 1.

TABLE 1

|  | First index | Second index | Total |
|---|---|---|---|
| AND | X |  | - |
| ABC | (8) | 2 | 10 |
| DEF | (2) | 3 | 5 |

There illustrated in Table 1 is the case where no document in the first index satisfies the AND operator, and where documents satisfying the AND operator are found only in the second index.

The numbers shown in the rows designated by ABC and DEF are document frequencies in the first and second indices, and in total, respectively. In addition, the parenthesized numbers in the first column are those, for which the interim results are not generated by the TF computing section 12.

In case when the interim results for the node corresponding to retrieval character string is always obtained as shown in the third embodiment, the document frequency can be obtained from these results with relative ease.

In the present embodiment, in contrast, there may give rise to the case where interim results are not obtained when the noted TF computing method is used in the preset embodiment. The number of document, in which the retrieval character strings ABC and DEF are contained, has to be obtained separately for the first index by means of the DF computing section 13.

Furthermore, when no document satisfying the AND operator is found for both first and second indices, no difficulty is caused by the absence of the interim results, since the result indicating no such document satisfying the AND operator is also formed after merging steps and accordingly there is no need for computing scores for the nodes corresponding to the retrieval character string (index unit).

In addition, in case when the ANDNOT operator is contained in the internal representation of the tree structure (step S502), and when the node corresponding to retrieval character string, by which the interim results are stored, is contained only in one index (step S502), the number of documents, in which the retrieval character string is contained, is inquired to the node in the other index corresponding to the same retrieval character string (step S503), and then overall document frequency is calculated (step S504).

Incidentally, the noted number of documents, in which the retrieval character string is contained, can be obtained relative ease by means of the simple retrieval (Boolean retrieval) performed by the above nodes for specifying the documents containing the retrieval character string.

The DF term computing section 14 subsequently calculates in a manner similar to the third embodiment the term related to the document frequency within document for obtaining the score (which is hereinafter referred to as DF term) using the document frequency obtained by the DF computing section 13 (together with the number of all documents currently retrieved), to thereby obtain final scores (step S206).

Also in a manner similar to the third embodiment, the merging section 15 subsequently merges retrieved results of the root nodes, to thereby generate the final retrieval results, and sort the results according to the order of magnitude of the score. The thus obtained final retrieval results are then output by the output unit 6.

As described herein above, the document retrieval system 100 according to the present embodiment is configured, (a) in case when at least one document is found which corresponds to the conjunction operator, for the document frequency within document computing means (including TF computing section 12) to make the conjunction operator to instruct the child nodes to calculate the term related to document frequency, and (b) in case when at least one document which corresponds to the conjunction operator is found in the first index but not in the second index, for the document frequency computing means (including the DF computing section 13) to instruct the child node corresponding to the retrieval character string, which stores no interim results, to inquire on the document containing the retrieval character string.

As a result, the processing efficiency with the AND operator is improved over the third embodiment and the speed of ranking retrieval can be increased.

In addition, the document retrieval system 100 according to the present embodiment is configured, (a) in case when at least one document is found which corresponds to the ANDNOT operator, for the document frequency within document computing means (including TF computing section 12) to make the conjunction operator to instruct the child nodes to calculate the term related to document frequency, and (b) in case when at least one document which corresponds to the ANDNOT operator is found in the first index but not in the second index, for the document frequency computing means (including the DF computing section 13) to instruct the child node corresponding to the retrieval character string, which stores no interim results, to inquire on the document containing the retrieval character string.

As a result, the processing efficiency with the ANDNOT operator is improved over the third embodiment and the speed of ranking retrieval can be increased.

While the document retrieval method according to the present embodiment has been described herein above (including FIGS. 18 and 19) in the case where several programs for implementing the method are stored in the memory device 3, the method may alternatively be performed by means of the programs stored into other memory devices than the memory device 3, in that the document retrieval system 100 is formed suitably incorporating computer readable recording media including CD-ROM, FD, magneto optical disk (MO), mini disk (MD) and rewritable CD-ROM (CD-RW).

The pertinent programs are readout from the media by CD-ROM drive 8 or FDD 7, for example, and subsequently executed, to thereby be able to yield similar satisfactory results. With this construction of the retrieval system, the programs can be updated with relative ease by displacing and/ or exchanging the recording media.

Moreover, while the document retrieval method has also been described herein above (including FIGS. 18 and 19) utilizing several programs stored in the memory device 3, the method may alternatively be implemented using the programs which are downloaded from external means on the network such as LAN by way of the communication unit 10 including a communication interface such as the network interface and then stored into the memory device 3, to thereby be able to yield similar satisfactory results.

With this construction of the retrieval system, the programs can be updated with relative ease by way of the network.

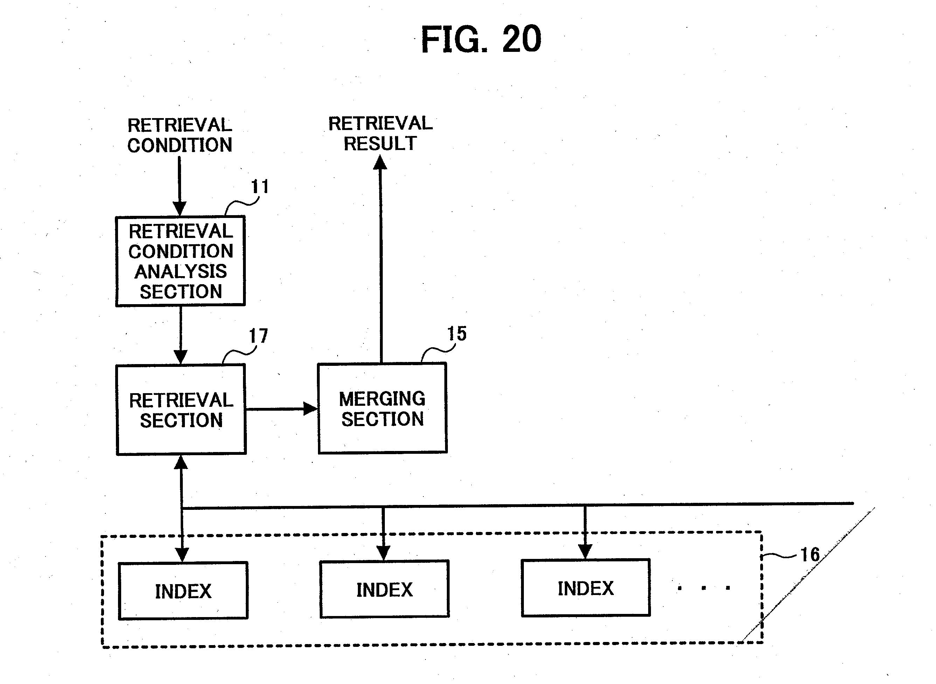

FIG. 20 is a block diagram illustrating the system configuration of the document retrieval system according to the fifth embodiment disclosed herein.

Since the present document retrieval system has broadly a similar hardware construction and operational configuration to those described in the previous embodiments, the drawing FIG. 1 is also used herein and the same reference numerals represent the same or like elements.

Referring to FIG. 20, the index section 16 includes plural indices for storing index by index a set of attributes for certain documents among a given set of the documents, which are specified by the occurrence therein of the index (included in search word) input by the input unit 5, for example. These operation steps with the index section 16 are enabled by the hard disk 4 and so on.

The index section 16 also generates a line for each index unit. In addition, the maximum and minimum IDs are stored in the first and second indices, 21A and 21B, respectively, and the leading character string, "CD", denotes an index unit.

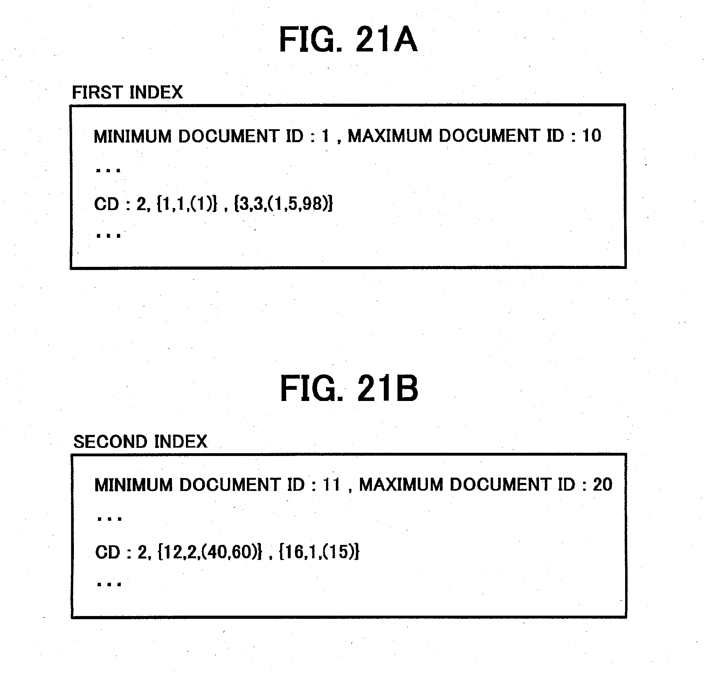

Further, the numeral next to the character string CD in respective indices then denotes document frequency. This is illustrated also in FIG. 21A by the numeral 2 in the first index indicating the character string appears in two documents, and the numeral 2 in the second index also indicating the character string appears in two documents.

The numeral in each index headed by the document frequency consists of occurrence information for the character string CD.

That is, the portion parenthesized by {} is allocated to denote several pieces of numerical information such as a document ID for identifying the document (an integer for designating the document), an occurrence frequency within the document for the character string CD, and an occurrence location (indicating the offset from the beginning, given for each occurrence) again within the document for the character string.

For example, the numerical information {1, 1, (1)} for the first column in the first index of FIG. 21A indicates the character string CD appears once in the document having the document ID = 1 (i.e. in the first document) at the location designated by (1).

In a similar manner, the numerical information {3, 3, (1, 5, 98)} for the second column in the first index indicates the character string CD appears three times in the document having the document ID = 3 at the location designated by (1, 5, 98). In addition, also indicated in the first index are the minimum value of the document ID (i.e., minimum document ID) = 1 and the maximum value of the document ID (i.e., maximum document ID) = 10.

In the second index as illustrated in FIG. 21B, it is indicated by the numerical information for the first column in the second index that the character string appears twice in the document having the document ID = 12 at the location designated by (40, 60), while from the numerical information for the second column in the second index it is indicated that the character string appears once in the document having the document ID = 16 at the location designated by (15).

In addition, also indicated in the second first index are the minimum document ID = 11 and the maximum document ID = 20.

The retrieval condition analyzing section 11 is configured to analyze retrieval conditions (including retrieval character strings and logical operators) input by the input unit 5 or input by way of a recording medium such as, for example, flexible disk and to generate a predetermined executable internal representation. The operation steps with the retrieval condition analyzing section 11 are enabled by the CPU 20, memory 3 and others.

The retrieval section 17 is configured to identify the documents containing the retrieval character string (containing index unit), index by index, in reference to the attributes stored the index section 16, and to generate retrieval results for each index based on the internal representation. These operation steps with retrieval section 17 are enabled by the CPU 20, memory 3 and others.

The merging section 15 is configured to merge the retrieval results obtained for each index by the retrieval section 17 and generate final retrieval results. The operation steps with the merging section 15 are enabled by the CPU 20, memory 3 and others.

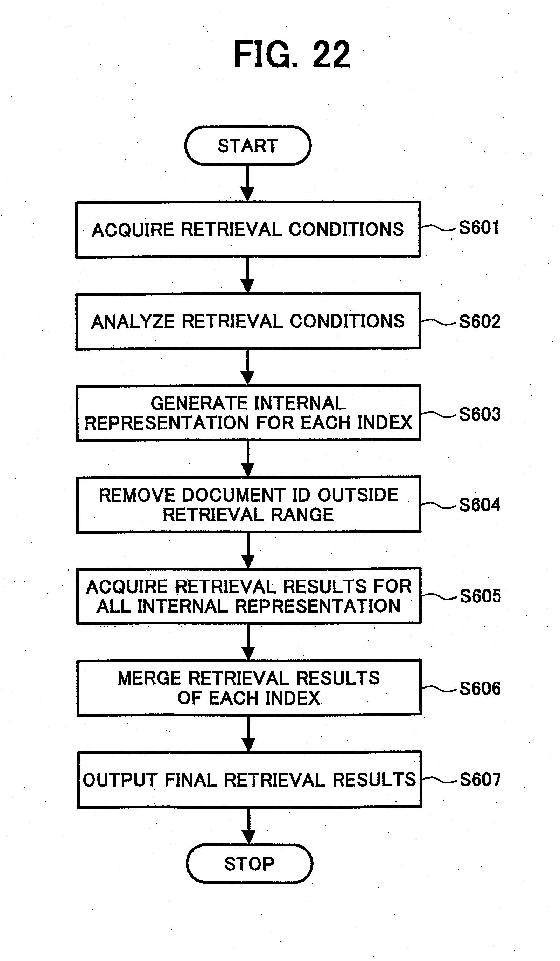

Referring to FIG. 22, operation steps for implementing the document retrieval will be detailed in the next place according to the present embodiment.

In the description which follows, the number of the index is assumed to be two for purposes of explanation (as illustrated in FIGS. 21A and 21B), since the steps for the case with three or more indices can be known by analogy with relative ease.

The retrieval condition analyzing section 11 acquires (step S601) and analyzes (step S602) retrieval conditions input by, for example, the input unit 5.

Subsequently, the retrieval condition analyzing section 11 functions to extract retrieval character strings, document ID ensemble and logical operators, and then examines whether this retrieval character string is dividable into the index unit.

If the retrieval character string is found dividable into the index unit, the string is subsequently divided, and the thus divided index unit is combined with the distance operator, an internal representation in the tree structure is generated for each index unit (step S603).

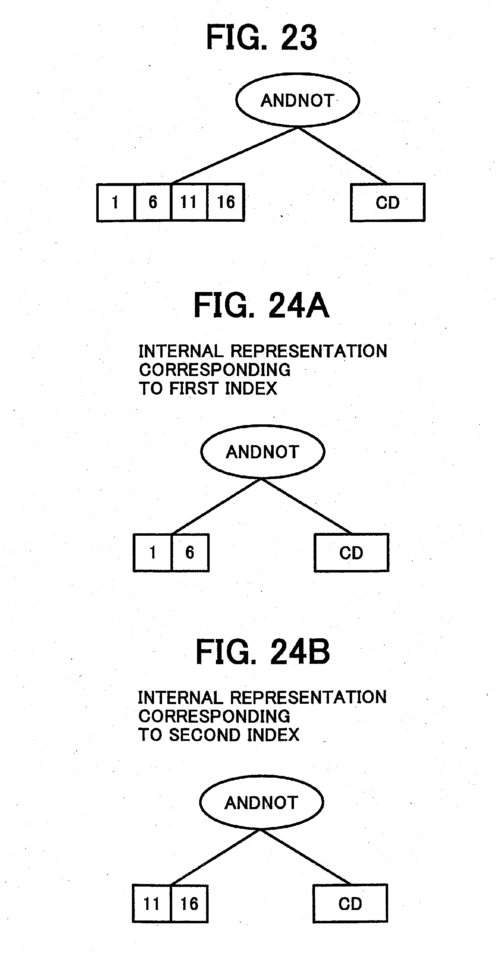

For example, if the retrieval condition is "ANDNOT ({1, 6, 11, 16}, 'CD')", there extracted are "CD" as the retrieval character string, "{1, 6, 11, 16}" as the document ID ensemble and the ANDNOT as the logical operator, and an internal representation is subsequently generated having a structure shown in FIG. 23.

Incidentally, the ANDNOT operator is the one which has two nodes, and which functions to acquire the following document as the retrieval result for the operation, in which this document satisfies the first child node but not the second child node.

It may be noted that the term 'CD' is herein assumed as a retrieval character string, and the processing of this term, in the case when the number of the character differs one another between the term and the retrieval character string, can be carried out in a similar manner as described earlier in the first embodiment.

Subsequently, based on minimum and maximum document IDs stored in the respective indices as shown in FIGS. 21A and 21B, the retrieval condition analyzing section 11 functions to remove the document IDs not eligible for the present retrieval from the document ID ensemble contained in the internal representation shown in FIG. 23 (step S604). The above noted document removal is hereinafter referred to as correction processing of the document ID ensemble.

The correction processing steps of the document ID ensemble leads the internal representation now generated as shown in FIGS. 24A and 24B for the first and second indices, respectively, in that the document ID ensemble has the corrected form of {1, 6} and {11, 16} for the first and second indices, respectively.

The retrieval section 17 subsequently acquires retrieval results for whole internal representation using the occurrence information for the index units (step S605), which leads to the retrieval results {6} and {11} for the first and second indices, respectively.

Finally, the merging section 15 functions to merge the thus obtained retrieval results (obtain the ensemble sum) for each index and obtain the final retrieval results (step S606).

In the present example, the final retrieval result is obtained as {6, 11} which is recognized correct, and subsequently output by the output unit 6 (step S607).

As described herein above, the document retrieval system 100 according to the present embodiment is provided with several means for suitably implementing document retrieval, including

a index means (including the index section 16) for storing and managing plural indices which are each generated for respective groups of divided documents among those to be currently retrieved, and which contain an index unit for use in the retrieval, occurrence information of the index unit, and minimum and maximum document IDs for respective groups of the divided documents;

a retrieval condition analyzing means (including the retrieval condition analyzing section 11) for analyzing acquired retrieval conditions, dividing the retrieval character string contained in the retrieval conditions into index units, and representing the retrieval conditions in terms of internal representation for each index;

a retrieval means (including the retrieval section 17) for removing document IDs not eligible for the present retrieval from the document ID ensemble contained in the internal representation based on minimum and maximum document IDs stored in the respective indices, and thereafter specifying the documents containing the retrieval character string in reference to the tree structure; and

a merging means (including the merging section 15) for merging retrieval results for each index, to thereby generate final retrieval results.

As a result, when the retrieval conditions, for obtaining set operations of the retrieval results containing the retrieval result ensemble and retrieval character string, are processed using plural indices, the results can be obtained similar to those from the processing using a single index.

According to still another aspect, the document retrieval system 100 according to the present embodiment is configured to implement a document retrieval method, including several steps such as

the steps S602 and S603 for analyzing retrieval conditions, and determining index units in reference to the retrieval character string contained in the retrieval conditions;

the step S604 for removing the documents having document IDs outside of the range between the minimum and maximum document IDs stored in the respective indices,

the step S605 for specifying the documents containing the retrieval character string for each index in reference to the tree structure after the removal of above documents having document IDs outside of the noted range, and

the step S606 for merging retrieval results for each index, to thereby generate final retrieval results.

As a result, when the retrieval conditions, for obtaining set operations of the retrieval results containing the retrieval result ensemble and retrieval character string, are processed using plural indices, the results can be obtained similar to those from the processing using a single index, as also described herein above.

While the document retrieval method according to the present embodiment has been described herein above (including FIG. 22) in the case where several programs for implementing the method are stored in the memory device 3, the method may alternatively be performed by means of the programs stored into other memory devices than the memory device 3, in that the document retrieval system 100 is formed suitably incorporating computer readable recording media including CD-ROM, FD, magneto optical disk (MO), mini disk (MD) and rewritable CD-ROM (CD-RW).

The pertinent programs are readout from the media by CD-ROM drive 8 or FDD 7, for example, and subsequently executed, to thereby be able to yield similar satisfactory results. With this construction of the retrieval system, the programs can be updated with relative ease by displacing and/ or exchanging the recording media.

In addition, while the document retrieval method has been also described herein above (including FIG. 22) utilizing several programs stored in the memory device 3, the method may alternatively be implemented using the programs which are downloaded from external means on the network such as LAN (local area network) by way of the communication unit 10 including a communication interface such as the network interface and then stored into the memory device 3, to thereby be able to yield similar satisfactory results.

With this construction of the retrieval system, the programs can be updated with relative ease by way of the network.

In this context, the advantages of the present process steps become evident when the retrieval conditions are processed without implementing the method presently embodied, in which retrieval results containing the retrieval result ensemble and retrieval character string are processed for respective indices as will be described herein below.

In this example, there assumed are the documents each given an ID (an integer for designating the document) in registration order, twenty documents to be currently retrieved, two indices in use for the retrieval, the first index corresponding to the documents each having document ID of 1 through 10, and the second index corresponding to the documents each having document ID of 11 through 20.

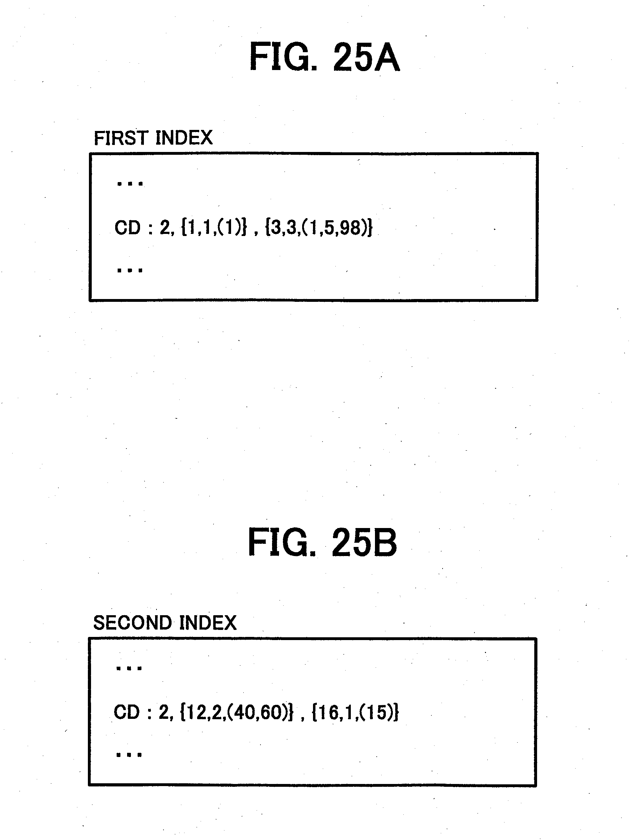

In the first place, under the retrieval condition "AB", the retrieval result {1, 6, 11, 16} is obtained. In order to specify the documents, which do not contain "CD", out of the above resulted documents, the retrieval condition "ANDNOT ({1, 6, 11, 16}, 'CD')" is used, and an internal representation is subsequently generated as shown in FIG. 23 for each index. Alternatively, the entry "CD" is assumed to be recorded for each index as shown in FIGS. 25A and 25B.

As described earlier, since the first numeral in each entry represents document frequency (the number of document containing the entry), it is indicated that "CD" appears in two documents in the first index.

In addition, the portion following thereto represents several pieces of numerical information as parenthesized by {}, including the document ID, an occurrence frequency within the document for the character string, and an occurrence location (indicating the offset from the beginning, given for each occurrence) again within the document for the character string.

For example, from the first occurrence information in the first index, it is indicated the character string CD appears once in the document having the document ID = 1 at the location designated by (1).

The retrieval results using the indices are obtained as {6, 11, 16} for the first index, and {1, 6, 16} for the second index, leading to the merged result as {1, 6, 11, 16}, which turns out to be incorrect.

It is therefore clearly shown the document retrieval method disclosed earlier implemented with the document retrieval system 100 according to the present embodiment yields correct result {6, 11} and can offer advantages over other methods.

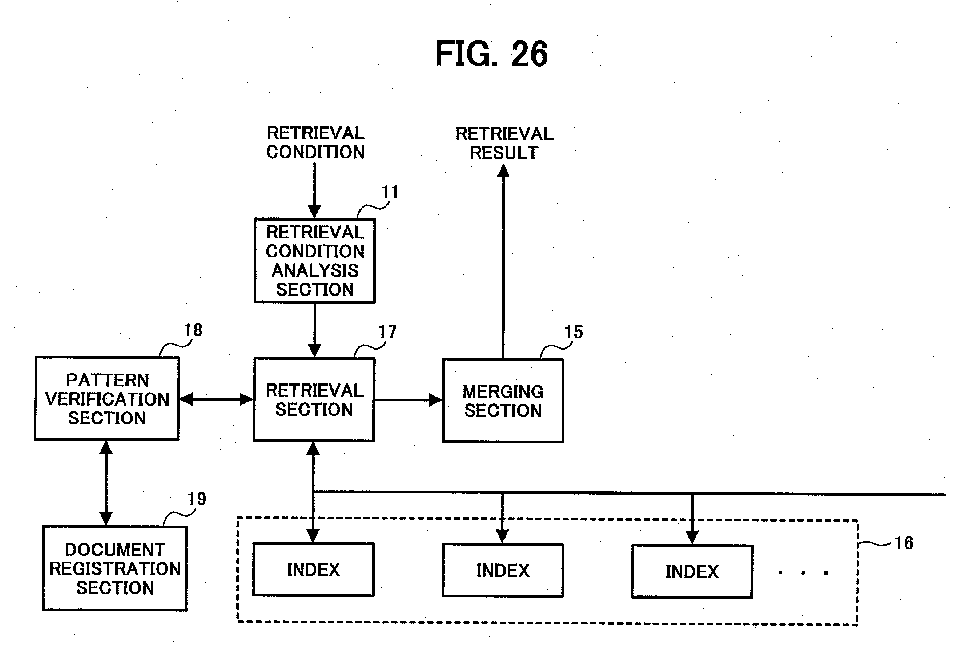

FIG. 26 is a block diagram illustrating the system configuration of the document retrieval system according to the sixth embodiment disclosed herein.

Since the present document retrieval system has broadly a similar hardware construction and operational configuration to those described in the previous embodiments, the drawing FIG. 1 is used also herein and the same reference numerals represent the same or like elements.

Referring to FIG. 26, the index section 16 includes plural indices for storing index by index a set of attributes for certain documents among a given set of the documents, which are specified by the occurrence therein of the index (included in search word) input by the input unit 5, for example. These operation steps with the index section 16 are enabled by the hard disk 4 and so on.

In a manner similar to the previous embodiment, the index section 16 generates a line for each index unit and stores the minimum and maximum document IDs for respective indices.

In addition, the leading character string denotes an index unit and the numeral next to the character string in respective indices denotes document frequency.

The retrieval condition analyzing section 11 is configured to analyze retrieval conditions (including retrieval character strings and logical operators) input by the input unit 5 or input by way of a recording medium such as, for example, flexible disk and to generate a predetermined executable internal representation. The operation steps with the retrieval condition analyzing section 11 are enabled by the CPU 20, memory 3 and others.

The document registration section 19 is configured to store the documents themselves, input by the input unit 5 or input by way of a recording medium such as, for example, flexible disk and subsequently registered. The operation steps with the document registration section 19 are enabled by the hard disk, for example.

The pattern verification section 18 is configured to read documents out from the document registration section 19 under the control by the retrieval section 17, determine whether at least one document is present which contains regular expression patterns given by the retrieval section 17 among the documents the registered documents, and return the thus determined document ensemble containing the regular expression patterns the retrieval section 17. The operation steps with the pattern verification section 18 are enabled by the CPU 20, memory 3 and others.

The retrieval section 17 is configured to acquire the document ensemble containing the regular expression patterns by way of the pattern verification section 18, identify the documents containing the retrieval character string (containing index unit), index by index, in reference to the attributes stored the index section 16, and to generate retrieval results for each index based on the internal representation. These operation steps with retrieval section 17 are enabled by the CPU 20, memory 3 and others.

The merging section 15 is configured to merge the retrieval results obtained by the retrieval section 17 for each index and generate final retrieval results. The operation steps with the merging section 15 are enabled by the CPU 20, memory 3 and others.

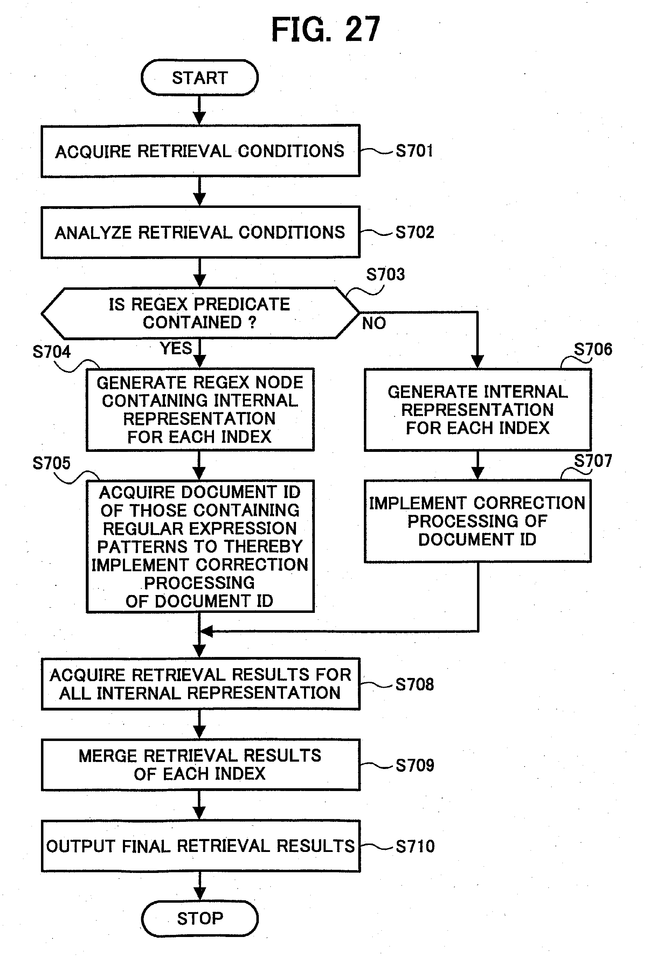

Referring to FIG. 27, operation steps for implementing the document retrieval will be detailed in the next place according to the present embodiment.

In the description which follows, the number of the index is assumed to be two for purposes of explanation, since the steps for three or more indices can be known by analogy with relative ease. In addition, there also assumed herein are regex predicates contained in the retrieval conditions for describing regular expression patterns.

The retrieval condition analyzing section 11 acquires and analyzes retrieval conditions input by, for example, the input unit 5 (step S702). During these steps, the retrieval condition analyzing section 11 determines whether regex predicates are contained in the retrieval conditions (step S703).

If the regex predicates are contained (i.e., yes in step S703), the retrieval condition analyzing section 11 subsequently operates to extract the retrieval character string, document ID ensemble and logical operators.

Also, the retrieval condition analyzing section 11 examine whether the retrieval character string is dividable into index units. If dividable, the retrieval character string is then divided into index units. The thus divided index units are subsequently combined with the distance operator, an internal representation in the tree structure is generated for respective index units, and a regex node is generated at the location corresponding to the tree structure (step S704).

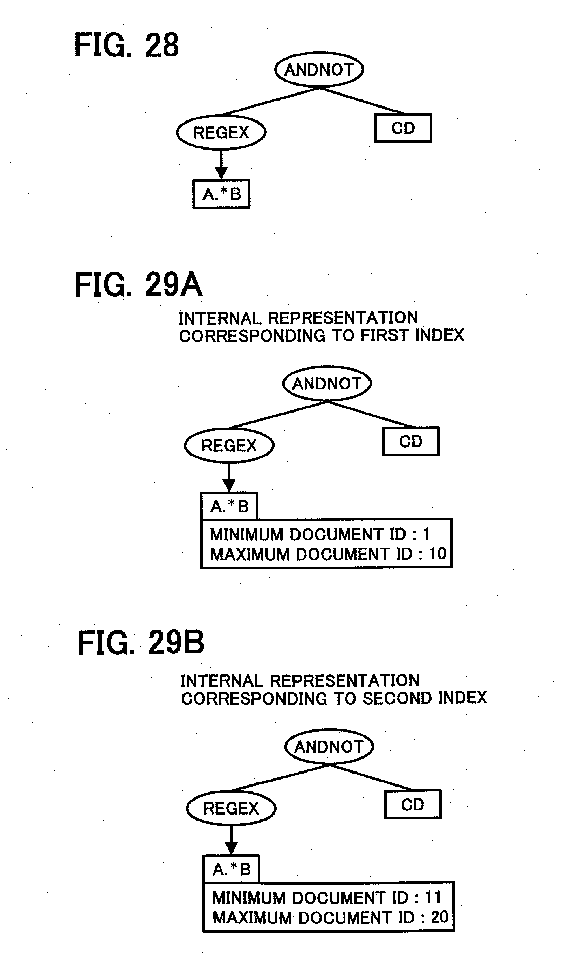

At the regex node, regular expression patterns are stored. For example, if the regex is the predicate in use for describing regular expression patterns under the retrieval condition "ANDNOT (regex (A.*B'), 'CD')", there extracted are ('CD', 'A.*B') as the retrieval character string, {1, 6, 11, 16} as the document ID ensemble, and ANDNOT as the logical operator, to thereby generate the internal representation with structure of FIG. 28.

As also shown in FIG. 28, the ANDNOT node has child nodes such as the regex node and the node representing the retrieval character string 'CD', and the regex node stores the regular expression pattern (retrieval character string 'A.*B'.

Incidentally, as noted earlier, the ANDNOT operator is the one, having two nodes and functioning to acquire the document as the retrieval result for the operation, in which the document satisfies the first child node but not the second child node.

In addition, there designated in the regular expression are '.' for arbitrary characters, and '*' for the repetition of n-times, n being inclusive of zero.

The retrieval section 17 now acquires the document ID of the documents containing the regular expression patterns by way of the pattern verification section 18, and carries out the correction processing of the document IDs in a similar manner to the fifth embodiment (step S705).

To be more specific, as shown in FIG. 29, the retrieval section 17 operates to affix the minimum and maximum document IDs stored in the indices to the regex node.

Subsequently, the retrieval section 17 acquires the document ID of the documents containing the regular expression patterns within the range of the minimum and maximum document IDs by way of the pattern verification section 18, and then treats the thus acquired results as document ID ensemble.

Subsequently, the pattern verification section 18 reads documents out from the document registration section 19 under the control by the retrieval section 17, as described earlier, determine whether the documents contain regular expression patterns given by the retrieval section 17, and return the thus determined document ID for the documents containing the regular expression patterns.

In case when the regex predicates are not contained (i.e., no in step S703), the retrieval condition analyzing section 11 subsequently functions to extract retrieval character strings, document ID ensemble and logical operators, and then examines whether this retrieval character string is dividable into the index unit.

If the retrieval character string is found dividable into the index unit, the string is subsequently divided, and the thus divided index unit is combined with the distance operator, an internal representation in the tree structure is generated for each index unit (step S706).

In addition, the correction processing of the document IDs is carried out by retrieval section 17 in a similar manner to the fifth embodiment (step S707).

Subsequently, the retrieval section 17 acquires retrieval results on the whole internal representation in tree structure in reference to the occurrence information on the retrieval unit for each index (step S708).

As a result, when the document pattern verified to correspond to (A.*B') is represented as {1, 6, 11, 16}, there obtained are {1, 6} and {11, 16} as the document ID ensemble corresponding to the regex node for the first and second indices, respectively, thereby leading to the retrieval results, {6} for the first index and {11} for the second index.

Finally, the merging section 15 functions to merge the thus obtained retrieval results for each index and obtain final retrieval results (step S709).

In this example, the final retrieval result is obtained as {6, 11} which is recognized correct, and subsequently output by the output unit 6 (step S710).

As described herein above, the document retrieval system 100 according to the present embodiment is provided with several means for suitably implementing document retrieval, including

a document registration means (including the document registration section 19) for registering identifiers for the groups of the documents to be currently retrieved and for respective documents;

a index means (including the index section 16) for storing and managing plural indices, each containing index units in use for the document retrieval, plural indices which are each generated for the groups of divided documents among those to be currently retrieved; occurrence information of respective indices, and minimum and maximum document IDs for respective groups of the documents divided for respective indices;

a regular expression pattern document acquisition means (including the pattern verification section 18) for reading out the documents previously registered in the registration section 19, and acquiring document IDs of the documents containing regular expression patterns given by the retrieval section 17 within the range of the minimum and maximum document IDs;

a retrieval condition analyzing means (including the retrieval condition analyzing section 11) for analyzing acquired retrieval conditions, dividing the retrieval character string contained in the retrieval conditions into index units, representing the retrieval conditions in terms of tree structure for each index, and making the tree structure to store the regular expression patterns in case when these patterns are contained in the retrieval character string;

a retrieval means (including the retrieval section 17) for instructing the pattern verification section 18 to acquire the document IDs of the documents containing the regular expression patterns within the minimum and maximum document IDs for respective indices, and specifying the documents containing the retrieval character string in reference to the tree structure among the documents having the acquired document IDs; and

a merging means (including the merging section 15) for merging retrieval results for each index, to thereby generate final retrieval results.

As a result, by storing minimum and maximum document IDs for respective groups of the documents divided for respective indices, reading out the documents registered within the minimum and maximum document IDs, and verifying the thus readout documents in reference to the regular expression patterns given by the retrieval section 17, the retrieval process can be achieved under retrieval conditions containing regular expression patterns.

According to still another aspect, the document retrieval system 100 according to the present embodiment is configured to implement a document retrieval method, including several steps such as

the steps S702 and S703 for analyzing retrieval conditions for the groups of documents divided into respective indices, and determining whether regular expression patterns are included in the retrieval character string contained in the retrieval conditions;

the step S704 for determining index units with the retrieval character string contained in the retrieval conditions when these patterns are contained in the retrieval character string, and representing the retrieval conditions including the index units in terms of tree structure for each index taking the noted regular expression patterns into consideration;

the step S705 for reading out the documents previously registered among the documents to be currently retrieved, and acquiring document IDs of the documents containing regular expression patterns given by the retrieval section 17 within the range of the minimum and maximum document IDs;

the steps S705 and S708 for acquiring the document IDs of the documents containing the regular expression patterns within the minimum and maximum document IDs for respective indices, and specifying the documents containing the retrieval character string in reference to the tree structure among the documents having the acquired document IDs; and

the step S709 for merging retrieval results for each index and generating final retrieval results.

As a result, by storing minimum and maximum document IDs for respective groups of the documents divided for respective indices, reading out the documents registered within the minimum and maximum document IDs, and verifying the thus readout documents in reference to the regular expression patterns given by the retrieval section 17, as also described earlier,

> the retrieval process can be achieved under retrieval conditions containing regular expression patterns.

While the document retrieval method according to the present embodiment has been described herein above (including FIG. 27) in the case where several programs for implementing the method are stored in the memory device 3, the method may alternatively be performed by means of the programs stored into other memory devices than the memory device 3, in that the document retrieval system 100 is formed suitably incorporating computer readable recording media including CD-ROM, FD, magneto optical disk (MO), mini disk (MD) and rewritable CD-ROM (CD-RW).

The pertinent programs are readout from the media by CD-ROM drive 8 or FDD 7, for example, and subsequently executed, to thereby be able to yield similar satisfactory results. With this construction of the retrieval system, the programs can be updated with relative ease by displacing and/ or exchanging the recording media.

In addition, while the document retrieval method has been also described herein above (including FIG. 27) utilizing several programs stored in the memory device 3, the method may alternatively be implemented using the programs which are downloaded from external means on the network such as LAN (local area network) by way of the communication unit 10 including a communication interface such as the network interface and then stored into the memory device 3, to thereby be able to yield similar satisfactory results.

With this construction of the retrieval system, the programs can be updated with relative ease by way of the network.

In this context, the advantages of the present process steps become evident when the retrieval conditions are processed without implementing the method presently embodied, in which retrieval conditions including regular expression patterns are utilized as will be described herein below.

In this example, there assumed are documents each given an ID (an integer for designating the document) in registration order, twenty of the documents to be currently retrieved, two indices in use for the retrieval, the first index corresponding to the documents each having document ID of 1 through 10, and the second index corresponding to the documents each having document ID of 11 through 20.

For example, if the retrieval conditions are used to retrieve the documents, which include a regular expression pattern 'A.*B' and which do not include another pattern 'CD', the terms such as 'AB' and 'A F B' are also determined to be satisfactory in addition to the term 'A.*B', in which the retrieval condition used therefor is "ANDNOT (regex (A.*B'), 'CD')".

In order to determine whether currently concerned documents contain regular expression patterns, the documents themselves have to be readout and then verified in reference to the regular expression patterns. From the retrieval conditions, an internal representation is generated for both first and second indices as shown in FIG. 28. The regex node therefore functions to reads out registered documents in sequence and then pattern verified.

In case when the document corresponds to 'A.*B', the retrieval results using the indices are obtained as {6, 11, 16} for the first index, and {1, 6, 11} for the second index, leading to the merged result as {1, 6, 11, 16}, which turns out to be incorrect.

It is therefore clearly shown the document retrieval method disclosed earlier implemented with the document retrieval system 100 according to the present embodiment yields correct result {6, 11} and can offer advantages over other methods.

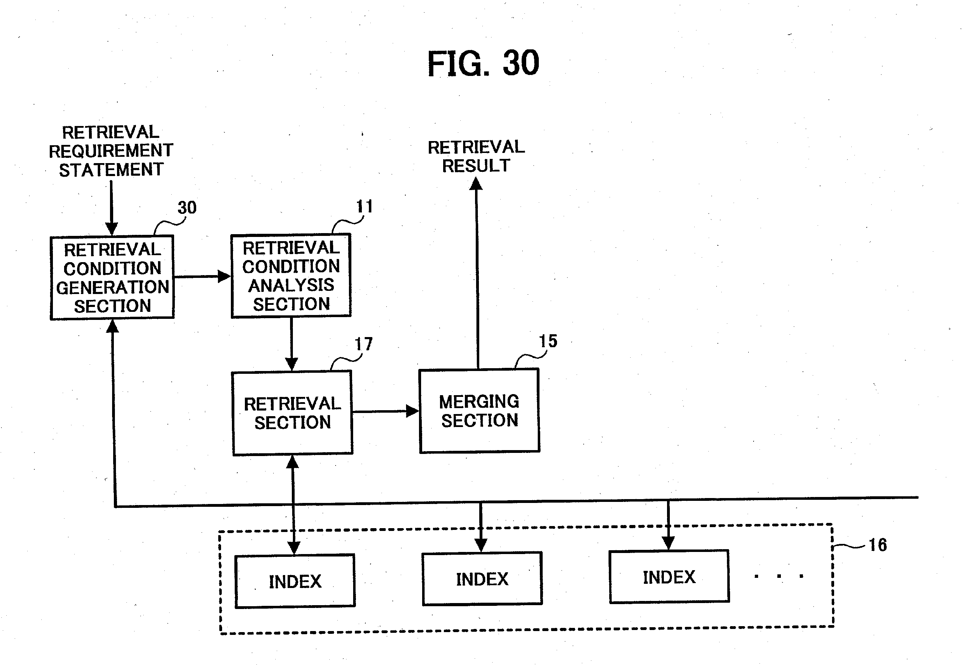

FIG. 30 is a block diagram illustrating the system configuration of the document retrieval system according to the seventh embodiment disclosed herein.

Since the present document retrieval system has broadly a similar hardware construction and operational configuration to those described in the previous embodiments with the exception that a retrieval condition generation section 30 is additionally provided, the drawing FIG. 1 is used also herein and the same reference numerals represent the same or like elements.

Referring to FIG. 30, the index section 16 includes plural indices for storing index by index a set of attributes for certain documents among a given set of the documents, which are specified by the occurrence therein of the index (included in search word) input by the input unit 5, for example. These operation steps with the index section 16 are enabled by the hard disk 4 and so on.

In a manner similar to the previous embodiment, the index section 16 generates a line for each index unit and stores the minimum and maximum document IDs for respective indices.

In addition, the leading character string denotes an index unit and the numeral next to the character string in respective indices denotes document frequency.

The retrieval condition generation section 30 is configured, when a retrieval requirement, which is input by the input unit 5 or by way of recording medium such as, for example, flexible disk, is issued by means of a retrieval requirement statement described in terms of the natural language, to select the words useful for the retrieval contained in the retrieval statement and to generate appropriate retrieval conditions. These operation steps with the retrieval condition generation section 30 are enabled by the CPU 20, memory 3 and others.

The retrieval condition analyzing section 11 is configured to analyze the retrieval conditions generated by the retrieval condition generation section 30 and generate a predetermined executable internal representation. The operation steps with the retrieval condition analyzing section 11 are enabled by the CPU 20, memory 3 and others.

The retrieval section 17 is configured to identify the documents containing the retrieval character string (containing index unit), index by index, in reference to the attributes stored the index section 16, and to generate retrieval results for each index based on the internal representation. These operation steps with retrieval section 17 are enabled by the CPU 20, memory 3 and others.

The merging section 15 is configured to merge the retrieval results obtained by the retrieval section 17 for each index and generate final retrieval results. The operation steps with the merging section 15 are enabled by the CPU 20, memory 3 and others.

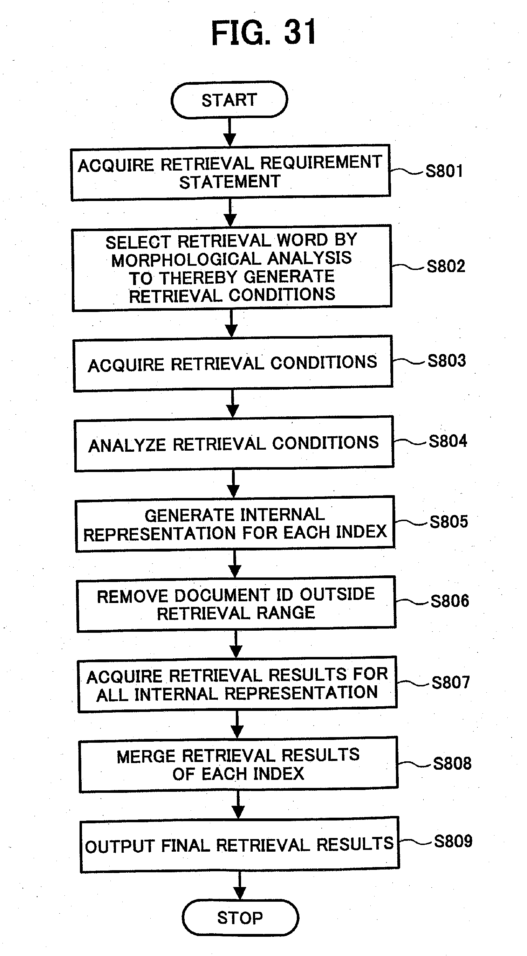

Referring to FIG. 31, operation steps for implementing the document retrieval will be detailed in the next place according to the present embodiment.

In the description which follows, the number of the index is assumed to be two for purposes of explanation, since the steps for three or more indices can be known by analogy with relative ease. In addition, there detailed herein below is primarily related to the case where the retrieval conditions are generated by selecting appropriate words from the retrieval requirement statement described in the natural language.

The retrieval condition generation section 30 functions to acquire the retrieval requirement statement input by, for example, the input unit 5 (step S801), implement morphological analysis on the retrieval requirement statement, and generate retrieval conditions based on the frequency of the selected words (step S802).

While the basis of word selection for generating the retrieval conditions is adequately set herein above such that the words are selected each to have the number of documents, in which the words appear, is smaller than the number of registered documents multiplied by a predetermined constant, it is not limited to the noted basis. In addition, other conditions can be included in combination such that, for example, the words belonging to a specific word class and/ or to word list are excluded from the selection.

Furthermore, by the word frequency is meant the sum of document frequencies recorded in respective indices.

For example, if a retrieval requirement statement is given as 'AB C DE', 'AB', 'C' and 'DE' are formed after morphological analysis steps. In order to obtain the rod frequencies in the document, the word frequencies of respective words in each index are assumed as given in Table 2.

TABLE 2

|  | First index | Second index |
| --- | --- | --- |
| AB | 3 | 6 |
| C | 8 | 7 |
| DE | 7 | 1 |

Subsequently, the retrieval condition analyzing section 11 acquires the retrieval conditions containing retrieval words, 'AB' and 'DE', generated by the retrieval condition generation section 30 (step S803) and analyzes the retrieval conditions (step S804).

The retrieval condition analyzing section 11 then functions to extract retrieval words, document ID ensemble and logical operators, divide the retrieval words into index units, and combine the thus divided index units with the distance operator, an internal representation in the tree structure is generated for each index unit (step S805).

Subsequently, based on minimum and maximum document IDs stored in the respective indices, the retrieval section 17 functions to remove the document IDs not eligible for the present retrieval from the document ID ensemble contained in the internal representation in tree structure (step S806).

In addition, the retrieval section 17 acquires retrieval results for whole internal representation using the occurrence information for the index units (step S807).

Finally, the merging section 15 merges the thus obtained retrieval results for each index and obtains the final retrieval results (step S808). The final retrieval result is subsequently output by the output unit 6 (step S808).

As described herein above, the document retrieval system 100 according to the present embodiment is further provided with a retrieval condition generation means 30 (including the retrieval condition generation section 30), when a retrieval requirement input by the input unit 5, for example, is issued by a retrieval requirement statement described in terms of the natural language, for acquiring the retrieval requirement statement input by, for example, the input unit 5, implementing morphological analysis on the retrieval requirement statement to thereby divide into words, selecting the word suitable for the current retrieval based on frequencies with which the words appear in plural indices (the first and second indices), and generating retrieval conditions.

As a result, a user is able to carry out document retrieval steps with more ease in terms of retrieval requirement statements described in the natural language.

Furthermore, the retrieval condition generation section 30 is herein configured to select the words from retrieval requirement statement for generating the retrieval conditions so as for the number of documents, in which the words appear, to be smaller than the number of registered documents multiplied by a predetermined constant.

As a result, the period of time which is required for selecting the noted words from the retrieval requirement statement input by a user, can be decreased.

While the document retrieval method according to the present embodiment has been described herein above (including FIG. 31) in the case where several programs for implementing the method are stored in the memory device 3, the method may alternatively be performed by means of the programs stored into other memory devices than the memory device 3, in that the document retrieval system 100 is formed suitably incorporating computer readable recording media including CD-ROM, FD, magneto optical disk (MO), mini disk (MD) and rewritable CD-ROM (CD-RW).

The pertinent programs are readout from the media by CD-ROM drive 8 or FDD 7, for example, and subsequently executed, to thereby be able to yield similar satisfactory results. With this construction of the retrieval system, the programs can be updated with relative ease by displacing and/ or exchanging the recording media.

In addition, while the document retrieval method has been also described herein above (including FIG. 31) utilizing several programs stored in the memory device 3, the method may alternatively be implemented using the programs which are downloaded from external means on the network such as LAN (local area network) by way of the communication unit 10 including a communication interface such as the network interface and then stored into the memory device 3, to thereby be able to yield similar satisfactory results.

With this construction of the retrieval system, the programs can be updated with relative ease by way of the network.

In this context, the advantages of the present process steps become evident when compared with selection process of the words for generating the retrieval conditions without implementing the method presently embodied, as will be described herein below.

In this example, there assumed are documents each given an ID (an integer for designating the document) in registration order, twenty of the documents to be currently retrieved, two indices in use for the retrieval, the first index corresponding to the documents each having document ID of 1 through 10, and the second index corresponding to the documents each having document ID of 11 through 20.

It has been generally considered that the words, which are contained in almost all of registered documents, are less effective for differentiating the documents. Accordingly, the basis of word selection is often adopted, in that the words, which are contained in 50% or more of registered documents, are not used for the selection. Details on the selection basis are described by D. Harman and G. Candela, Retrieving Records from a Gigabyte of Text on a Minicomputer Using Statistical Ranking, Journal of the American Society for Information Science, Vol. 41, No. 8, pp 582-589 (1990).

However, in the document retrieval in which plural indices are included, the trend of word appearance frequency is different among the indices one another, the results may be different from the results obtained from the retrieval processing using one index.

For example, when morphological analysis is carried out, the above noted retrieval requirement statement 'AB C DE' is divided into 'AB', 'C' and 'DE'.

Assuming the occurrence frequencies of respective words given in Table 3, and the words having the frequency of 50% or more are excluded from the selection, there remained as the retrieval words are 'AB' for the first index and 'DE' for the second index.

TABLE 3

|     | First index | Second index | Total |
| --- | --- | --- | --- |
| AB  | 3 | 6 | 9 |
| C   | 8 | 7 | 15 |
| DE  | 7 | 1 | 8 |

The thus obtained results are not correct, however, since both 'AB' and 'DE' should remain simultaneously, when the overall document frequency is considered.

In contrast, the document retrieval method according to the present embodiment can yield correct results as described herein above.

Incidentally, although ranking retrieval is not related explicitly in the fifth through seventh embodiments, the steps included in these embodiments may also be implemented for the ranking retrieval and can yield similar satisfactory results.

The ranking retrieval in such case may be carried out by the retrieval section 17 including several sections described in the first embodiment such as the TF computing section 12, DF computing section 13, and DF term computing section 14.

Also, the steps of correction processing of the document IDs are included in addition to the step carried out by the TF computing section 12, DF computing section 13, and DF term computing section 14.

The systems and process steps set forth in the present description may therefore be implemented using the host computer and terminals disclosed herein incorporating appropriate processors programmed according to the teachings disclosed herein, as will be appreciated to those skilled in the relevant arts.

Therefore, the present disclosure also includes a computer-based product which may be hosted on a storage medium and include instructions which can be used to program a processor to perform a process in accordance with the present disclosure. The storage medium can include, but is not limited to, any type of disk including floppy disks, optical disks, CD-ROMS, magneto-optical disks, ROMs, RAMs, EPROMs, EEPROMS, flash memory, magnetic or optical cards, or any type of media suitable for storing electronic instructions.

It is apparent from the above description including the examples, the system and method for document retrieval together with program storage device and computer program product for use with the document retrieval system disclosed herein, can provide excellent capabilities of accurate document retrieval even using plural indices with the accuracy as high as that for a single index previously employed.

These excellent capabilities of document retrieval are implemented in the present disclosure by the steps of specifying the documents containing a retrieval character string for each index; calculating a score as the term related to document frequency within document for each of the documents, a document frequency in relative to all documents currently retrieved based on the above noted result, and then the final score for each of the plural indices; and merging the thus obtained score results, as detailed herein above.

Additional modifications and variations of the present invention are possible in light of the above teachings. It is therefore to be understood that within the scope of the appended claims, the invention may be practiced other than as specifically described herein.

This document claims priority and contains subject matter related to Japanese Patent Applications No. 2002-53895 and 2002-76767, filed with the Japanese Patent Office on February 28, 2002 and March 19, 2002, respectively, the entire contents of which are hereby incorporated by reference.

**Claims**

1. A document retrieval system comprising:

   index means for storing and managing plural indices, said plural indices each containing an index unit for use in document retrieval and appearance information of said index unit, and said plural indices each being generated for respective groups of documents divided to be currently retrieved;

   retrieval condition analyzing means for acquiring retrieval conditions, analyzing said retrieval conditions, dividing a retrieval character string contained in said retrieval conditions into index units, and representing said retrieval conditions in terms of a predetermined internal representation for each of said plural indices;

   retrieval means for specifying documents containing said retrieval character string for each of said plural indices in reference to said predetermined internal representation; and

   merging means for merging retrieval results obtained in each of said plural indices, and generating final retrieval results.

2. A document retrieval system comprising:

   index means for storing and managing plural indices, said plural indices each containing an index unit for use in document retrieval and appearance information of said index unit, and said plural indices each being generated for respective groups of documents divided to be currently retrieved;

   retrieval condition analyzing means for acquiring retrieval conditions, analyzing said retrieval conditions, dividing a retrieval character string contained in said retrieval conditions into index units, and representing said retrieval conditions in terms of a predetermined internal representation for each of said plural indices;

   document frequency within document computing means for specifying documents containing said retrieval character string for each of said plural indices in reference to said predetermined internal representation, calculating a term related to document frequency within document to be used for obtaining a score for each of said documents, and storing results from calculation into a node in said internal representation as interim results;

   document frequency computing means, based on said interim results obtained by said document frequency within document computing means for each index, for calculating a document frequency as a frequency of said documents in relative to all documents currently retrieved, said retrieval character string appearing in said documents;

   score computing means for calculating a final score using said document frequency obtained by said document frequency computing means for each of said plural indices; and

   merging means for merging retrieval results obtained in each of said plural indices, and generating final retrieval results.

3. The document retrieval system according to claim 2, wherein:

   in case when said retrieval character string is longer than said index unit and when said internal representation is expressed by plural index unit nodes and a distance operator for verifying requirement for an appearance location within document of said retrieval units, said document frequency within document computing means instructs said distance operator to store results obtained by said document frequency within document computing means as interim results.

**4.** The document retrieval system according to claim 2 or 3, wherein:

in case when said retrieval character string is shorter than said index unit and when said internal representation is expressed by plural index unit nodes and by an expansion operator for aggregating frequency information within document on said index units, said document frequency within document computing means instructs said expansion operator to store results obtained by said document frequency within document computing means as interim results.

**5.** The document retrieval system according to claim 2, 3 or 4, wherein:

in case when said retrieval conditions contain an AND operator, said document frequency within document computing means instructs said AND operator, contained in said predetermined internal representation, makes child nodes to calculate terms related to a document frequency within document and aggregates scores for said child nodes being linked to said AND operator over documents satisfying all of said child nodes.

**6.** The document retrieval system according to claim 2, 3, 4 or 5, wherein:

in case when said retrieval conditions contain an OR operator, said document frequency within document computing means instructs said OR operator, contained in said predetermined internal representation, makes child nodes to calculate terms related to a document frequency within document and aggregates scores for said child nodes being linked to said OR operator over documents satisfying anyone of said child nodes.

**7.** The document retrieval system according to any one of claims 2 to 6, wherein:

in case when said retrieval conditions contain an ANDNOT operator, said document frequency within document computing means instructs said ANDNOT operator, contained in said predetermined internal representation, makes child nodes to calculate terms related to a document frequency within document and aggregates scores for said child nodes being linked to said ANDNOT operator over documents satisfying a first child node but not a second child node.

**8.** The document retrieval system according to any one of claims 2 to 7, wherein:

in case when at least one document is found which corresponds to an AND operator, said document frequency within document computing means makes said AND operator to instruct said child nodes to calculate a term related to document frequency, and wherein, in case when at least one document which corresponds to said conjunction operator is found in said first index but not in said second index, said document frequency computing means instructs said child node corresponding to said retrieval character string, which stores no interim results, to inquire on documents containing said retrieval character string.

**9.** The document retrieval system according to any one of claims 2 to 8, wherein:

in case when at least one document is found which corresponds to an ANDNOT operator, said document frequency within document computing means makes said ANDNOT operator to instruct said child nodes to calculate a term related to document frequency, and wherein, in case when at least one document which corresponds to said ANDNOT operator is found in said first index but not in said second index, said document frequency computing means instructs said child node corresponding to said retrieval character string, which stores no interim results, to inquire on documents containing said retrieval character string.

**10.** A document retrieval system comprising:

index means for storing and managing plural indices, said plural indices each being generated for groups of divided documents among those to be currently retrieved, and containing index unit for use in retrieval, occurrence information of said index unit, and minimum and maximum document IDs for respective groups of said divided documents; retrieval condition analyzing means for analyzing acquired retrieval conditions, dividing said retrieval character string contained in said retrieval conditions into index units, and representing said retrieval conditions in terms of internal representation for each index; retrieval means for removing document IDs not eligible for present retrieval from a document ID ensemble contained in said internal representation based on minimum and maximum document IDs stored in said respective indices, and specifying said documents containing said retrieval character string in reference to a tree structure; and

merging means for merging retrieval results for each index and generating final retrieval results.

11. A document retrieval system comprising:

document registration means for registering identifiers for groups of documents to be currently retrieved and for respective documents; index means for storing and managing plural indices, said plural indices each being generated for groups of divided documents among those to be currently retrieved and

containing index units in use for document retrieval, occurrence information of respective indices, and minimum and maximum document IDs for respective groups of documents divided for respective indices;

regular expression pattern document acquisition means for reading out documents previously registered in said registration section, and acquiring document IDs of said documents containing regular expression patterns given by said retrieval: section within a range of said minimum and

said maximum document IDs;

retrieval condition analyzing means for analyzing acquired retrieval conditions, dividing said retrieval character string contained in said retrieval conditions into index units, representing said retrieval conditions in terms of tree structure for each index, and making said tree structure to store said regular expression patterns in case when said patterns are contained in said retrieval character string;

retrieval means for instructing a pattern verification section to acquire said document IDs of said documents containing said regular expression patterns within said minimum and said maximum document IDs for each of said indices, and specifying said documents containing said retrieval character string in reference to said tree structure among said documents having said acquired document IDs; and

merging means for merging retrieval results for each of said indices and generating final retrieval results.

12. The document retrieval system according to any one of the preceding claims, further comprising:

retrieval condition generation means, in case when said retrieval conditions are expressed by a retrieval requirement statement described in terms of a natural language, for implementing morphological analysis on said retrieval requirement statement, dividing said retrieval requirement statement into words, selecting an appropriate word in use for retrieval from said words based on a frequency of said words appearing in said documents in each of said plural indices, and generating said retrieval conditions including said selected word.

13. The document retrieval system according to claim 12, wherein:

a basis of selection of said word for generating said retrieval conditions is set such that said word is selected to have a number of documents, in which said word appears, is smaller than that of registered documents multiplied by a predetermined constant.

14. A method for document retrieval, comprising the steps of:

a first group of steps including the steps of acquiring retrieval conditions, analyzing said retrieval conditions, dividing a retrieval character string contained in said retrieval conditions into index units, and representing said retrieval conditions in terms of a predetermined internal representation for each of said plural indices in use for retrieval consisting of documents divided to be currently retrieved;

a second group of steps including the steps of specifying documents containing said retrieval character string for each of said plural indices in reference to said predetermined internal representation, calculating a term related to document frequency within document to be used for obtaining a score for each of said documents, and storing results from calculation into a node in said internal representation as interim results;

a third group of steps including the step of calculating a document frequency as a frequency of said documents in relative to all documents currently retrieved, said retrieval character string appearing in said documents, based on said interim results obtained by said steps of second group, said document frequency within document computing means for each index;

a fourth group of steps including the step of calculating a final score using said document frequency obtained by said steps of third group for each of said plural indices; and

a fifth group of steps including the steps of merging retrieval results obtained in each of said plural indices, and generating final retrieval results.

**15.** The method for document retrieval according to claim 14, further comprising the step of:

storing results obtained by a document frequency within document computing means as interim results, in case when said retrieval character string is longer than said index unit and when said internal representation is expressed by plural index unit nodes and a distance operator for verifying requirement for an appearance location within document of said retrieval units.

**16.** The method for document retrieval according to claim 14 or 15, further comprising the step of:

storing results obtained by said document frequency within document computing means as interim results, in case when said retrieval character string is shorter than said index unit and when said internal representation is expressed by plural index unit nodes and an expansion operator for aggregating frequency information within document on said index units.

**17.** The method for document retrieval according to claim 14, 15 or 16, further comprising the steps of:

in case when said retrieval conditions contain an AND operator,
calculating terms related to a document frequency within document by child nodes; and
aggregating scores for said child nodes being linked to said AND operator over documents satisfying all of said child nodes.

**18.** The method for document retrieval according to claim 14, 15, 16 or 17, further comprising the steps of:

in case when said retrieval conditions contain an OR operator,
calculating terms related to a document frequency within document by child nodes; and
aggregating scores for said child nodes being linked to said OR operator over documents satisfying anyone of said child nodes.

**19.** The method for document retrieval according to claim 14, 15, 16, 17 or 18, further comprising the step of:

in case when said retrieval conditions contain an ANDNOT operator,
calculating terms related to a document frequency within document by child nodes; and
aggregating scores for said child nodes being linked to said ANDNOT operator over documents satisfying a first, but not a second of said child nodes.

**20.** The method for document retrieval according to any one of claims 14 to 19, further comprising the steps of:

calculating a term related to document frequency by an AND operator in case when at least one document is found corresponding to said AND operator; and
inquiring on documents containing said retrieval character string by said child node corresponding to said retrieval character string, which stores no interim results in case when at least one document which corresponds to said conjunction operator is found in said first index but not in said second index.

**21.** The method for document retrieval according to any one of claims 14 to 20, further comprising the steps of:

calculating a term related to document frequency by a child node corresponding to said retrieval character string in case when at least one document which corresponds to an ANDNOT operator is found; and
inquiring on documents containing said retrieval character string by said child node corresponding to said retrieval character string, which stores no interim results in case when at least one document which corresponds to said ANDNOT operator is found in said first, but not in said second index.

**22.** A method for document retrieval, comprising the steps of:

a first group of steps including the steps of analyzing retrieval conditions for each of plural indices containing documents divided to be currently retrieved, determining index units in reference to a retrieval character string contained in said retrieval conditions, and representing said retrieval conditions including said index unit in terms of a predetermined internal representation for each of said indices;
a second group of steps including the step of removing documents having document identifiers outside a range between a minimum and a maximum document IDs based on said range stored in each of said indices,
a third group of steps including the step of specifying documents containing said retrieval character string in reference to said tree structure for each of said plural indices after removing documents having document identifiers outside said range; and
a fourth group of steps including the steps of merging retrieval results for each of said plural indices and generating final retrieval results.

23. A method for document retrieval, comprising the steps of:

a first group of steps including the steps of analyzing retrieval conditions for each of plural indices containing documents divided to be currently retrieved, and determining whether a retrieval character string contained in said retrieval conditions contains regular expression patterns;

a second group of steps including the steps of determining index units in reference to a retrieval character string contained in said retrieval conditions in case when said regular expression patterns are contained in said retrieval conditions, and representing said retrieval conditions including said index unit in terms of a predetermined internal representation for each of said indices;

a third group of steps including the steps of reading out documents previously registered, and acquiring document identifiers of said documents, in said index currently retrieved, containing regular expression patterns within a range of a minimum and a maximum document identifiers;

a fourth group of steps including the step of specifying documents containing said retrieval character string in reference to said tree structure for each of said plural indices among said documents containing said regular expression patterns within said range; and

a fifth group of steps including the steps of merging retrieval results for each of said plural indices, and generating final retrieval results.

24. A computer program comprising program code means that, when executed on a computer system, instruct the computer system to effect the method of any one of claims 13 to 23.

25. A computer program comprising program code means that, when executed on a computer system, instruct the computer system to operate as a document retrieval system according to any one of claims 1 to 12.

## FIG. 1

BUS

COMMUNICATION UNIT 10

CD-ROM DRIVE 8

HARD DISK 4

FDD 7

MEMORY 3

OUTPUT UNIT 6

CPU 20

INPUT UNIT 5

9

100

# FIG. 2

RETRIEVAL
CONDITION

RETRIEVAL
RESULT

RETRIEVAL
CONDITION
ANALYSIS
SECTION — 11

TF TERM
COMPUTING
SECTION — 12

DF
COMPUTING
SECTION — 13

DF TERM
COMPUTING
SECTION — 14

MERGING
SECTION — 15

INDEX     INDEX     INDEX   · · · — 16

EP 1 341 101 A2

# FIG. 3A

FIRST INDEX

```
. . .

ABC : 8, {1,1,(1)} , {11,3,(1,5,98)}  . . .

. . .
```

# FIG. 3B

SECOND INDEX

```
. . .

ABC : 2, {101,2,(40,60)} , {121,1,(15)}

. . .
```

# FIG. 4

START

ACQUIRE RETRIEVAL CONDITIONS — S101

ANALYZE RETRIEVAL CONDITIONS — S102

GENERATE INTERNAL REPRESENTATION FOR EACH INDEX — S103

CALCULATE TF TERM FOR EACH INDEX — S104

CALCULATE OVERALL DOCUMENT FREQUENCY — S105

CALCULATE DF TERM — S106

MERGE RETRIEVAL RESULTS OF EACH INDEX — S107

OUTPUT FINAL RETRIEVAL RESULTS — S108

STOP

# FIG. 5

# FIG. 6A

INTERNAL REPRESENTATION
CORRESPONDING
TO FIRST INDEX

# FIG. 6B

INTERNAL REPRESENTATION
CORRESPONDING
TO SECOND INDEX

# FIG. 7A

INTERNAL REPRESENTATION
CORRESPONDING
TO FIRST INDEX

| ABC | | |
|-----|-----|-----|

| 1 | 11 | · · · |
|-----|-----|-------|
| 5 | 15 | · · · |

# FIG. 7B

INTERNAL REPRESENTATION
CORRESPONDING
TO SECOND INDEX

| ABC | |
|-----|-----|

| 101 | 121 |
|-----|-----|
| 10 | 5 |

# FIG. 8

| 11 | 101 | · · · | 1 | 121 |
|-----|-----|-------|-----|-----|
| 15 | 10 | · · · | 5 | 5 |

# FIG. 9

· · ·

AB : 12, {1,2,(1,20)} , {2,1,(8)} , {11,4,(1,5,40,98)} · · ·

BC : 8, {1,1,(2)} , {11,4,(2,6,99,175)} · · ·

· · ·

# FIG. 10

START

ACQUIRE RETRIEVAL CONDITIONS — S201

ANALYZE RETRIEVAL CONDITIONS — S202

DIVIDE INTO N-GRAM INDEX UNIT
TO THEREBY GENERATE INTERNAL
REPRESENTATION FOR EACH INDEX — S203

FOR NODE CORRESPONDING
TO RETRIEVAL CHARACTER STRING
TO CALCULATE TF TERM
FOR EACH INDEX — S204

SUMMATE DOCUMENT FREQUENCY
FOR NODE CORRESPONDING TO
RETRIEVAL CHARACTER STRING
FOR EACH INDEX TO THEREBY
OBTAIN DOCUMENT FREQUENCY
OF ALL DOCUMENTS — S205

CALCULATE FINAL SCORE
FOR EACH INDEX BASED ON ABOVE
DOCUMENT FREQUENCY — S206

MERGE RETRIEVAL RESULTS
OF EACH INDEX — S207

OUTPUT FINAL RETRIEVAL RESULTS — S208

STOP

# FIG. 11

DIST=1

AB          BC

# FIG. 12

DIST=1 →

| 1 | 11 | · · · |
|---|----|-------|
| 1 | 3  | · · · |

AB          BC

# FIG. 13

EXP

AG     AH     · · ·

# FIG. 14A

FIG. 14

| FIG. 14A |
|---|
| FIG. 14B |

```
        ( START )
            │
            ▼
┌───────────────────────────┐
│ ACQUIRE RETRIEVAL CONDITIONS │ ── S301
└───────────────────────────┘
            │
            ▼
┌───────────────────────────┐
│ ANALYZE RETRIEVAL CONDITIONS │ ── S302
└───────────────────────────┘
            │         S303
            ▼
< CONTAIN LOGICAL OPERATOR ? > ──NO──► TO S203 IN FIG. 10
            │ YES
            ▼
┌───────────────────────────┐
│ DIVIDE INTO N-GRAM INDEX UNIT │
│ TO THEREBY GENERATE INTERNAL │
│ REPRESENTATION FOR EACH NODE │ ── S304
│ CONTAINING LOGICAL OPERATION │
│           NODE               │
└───────────────────────────┘
            │
            ▼
┌───────────────────────────┐
│   FOR NODE CORRESPONDING    │
│ TO RETRIEVAL CHARACTER STRING │ ── S305
│   TO CALCULATE TF TERM      │
│      FOR EACH INDEX         │
└───────────────────────────┘
            │
            ▼
┌───────────────────────────┐
│ SUMMATE DOCUMENT FREQUENCY  │
│   FOR NODE CORRESPONDING TO │
│  RETRIEVAL CHARACTER STRING │
│  FOR EACH INDEX TO THEREBY  │ ── S306
│  OBTAIN DOCUMENT FREQUENCY  │
│      OF ALL DOCUMENTS       │
└───────────────────────────┘
            │
            ▼
┌───────────────────────────┐
│     CALCULATE DF TERM       │
│ FOR EACH INDEX BASED ON ABOVE │ ── S307
│  NOTED DOCUMENT FREQUENCY   │
└───────────────────────────┘
            │
            ▼
          ( 1 )
```

# FIG. 14B

① S308

OR / TYPE OF LOGICAL OPERATOR ? \ ANDNOT

AND S309 S310 S311

| SUMMATE SCORES OF CHILD-NODE EVERYTIME WHEN DOCUMENT IS FOUND TO SATISFY ANYONE OF CHILD-NODES | SUMMATE SCORES OF CHILD-NODE EVERYTIME WHEN DOCUMENT IS FOUND TO SATISFY ALL CHILD-NODES | SUMMATE SCORES OF FIRST CHILD-NODE EVERYTIME WHEN DOCUMENT IS FOUND FIRST CHILD-NODE BUT NOT SECOND |

MERGE RETRIEVAL RESULTS OF EACH INDEX — S312

OUTPUT FINAL RETRIEVAL RESULTS — S313

STOP

# FIG. 15

# FIG. 16

EP 1 341 101 A2

EP 1 341 101 A2

# FIG. 17

# FIG. 18

START

S401

OR — TYPE OF LOGICAL OPERATION ?

AND/AND NOT

S402

CORRESPONDING DOCUMENT ?

NO

YES

S403

GENERATE INTERIM RESULTS

STOP

# FIG. 19

START

S501
TYPE OF LOGICAL OPERATION ?

OR

AND/AND NOT

S502
INTERIM RESULT HELD NODE ONLY IN ONE INDEX ?

NO

YES

S503
INQUIRE NUMBER OF DOCUMENT TO RETRIEVAL CORRESPONDING NODE IN THE OTHER INDEX

S504
CALCULATE OVERALL DOCUMENT FREQUENCY

STOP

# FIG. 20

RETRIEVAL CONDITION → RETRIEVAL CONDITION ANALYSIS SECTION (11) → RETRIEVAL SECTION (17)

MERGING SECTION (15) → RETRIEVAL RESULT

INDEX ... INDEX INDEX (16)

# FIG. 21A

FIRST INDEX

MINIMUM DOCUMENT ID : 1 , MAXIMUM DOCUMENT ID : 10

. . .

CD : 2, {1,1,(1)} , {3,3,(1,5,98)}

. . .

# FIG. 21B

SECOND INDEX

MINIMUM DOCUMENT ID : 11 , MAXIMUM DOCUMENT ID : 20

. . .

CD : 2, {12,2,(40,60)} , {16,1,(15)}

. . .

EP 1 341 101 A2

# FIG. 22

START

ACQUIRE RETRIEVAL CONDITIONS — S601

ANALYZE RETRIEVAL CONDITIONS — S602

GENERATE INTERNAL REPRESENTATION FOR EACH INDEX — S603

REMOVE DOCUMENT ID OUTSIDE RETRIEVAL RANGE — S604

ACQUIRE RETRIEVAL RESULTS FOR ALL INTERNAL REPRESENTATION — S605

MERGE RETRIEVAL RESULTS OF EACH INDEX — S606

OUTPUT FINAL RETRIEVAL RESULTS — S607

STOP

# FIG. 23

```
        ANDNOT
       /        \
  1  6 11 16      CD
```

# FIG. 24A

INTERNAL REPRESENTATION
CORRESPONDING
TO FIRST INDEX

```
        ANDNOT
       /        \
    1  6          CD
```

# FIG. 24B

INTERNAL REPRESENTATION
CORRESPONDING
TO SECOND INDEX

```
        ANDNOT
       /        \
   11 16          CD
```

# FIG. 25A

FIRST INDEX

...

CD : 2, {1,1,(1)} , {3,3,(1,5,98)}

...

# FIG. 25B

SECOND INDEX

...

CD : 2, {12,2,(40,60)} , {16,1,(15)}

...

# FIG. 26

RETRIEVAL CONDITION → RETRIEVAL CONDITION ANALYSIS SECTION (11)

RETRIEVAL RESULT ← MERGING SECTION (15)

PATTERN VERIFICATION SECTION (18) ↔ RETRIEVAL SECTION (17) → MERGING SECTION (15)

DOCUMENT REGISTRATION SECTION (19)

INDEX   INDEX   INDEX  · · · (16)

EP 1 341 101 A2

# FIG. 27

START

ACQUIRE RETRIEVAL CONDITIONS — S701

ANALYZE RETRIEVAL CONDITIONS — S702

S703

IS REGEX PREDICATE CONTAINED ?

YES                                          NO

S704

GENERATE REGEX NODE CONTAINING INTERNAL REPRESENTATION FOR EACH INDEX

S706

GENERATE INTERNAL REPRESENTATION FOR EACH INDEX

S705

ACQUIRE DOCUMENT ID OF THOSE CONTAINING REGULAR EXPRESSION PATTERNS TO THEREBY IMPLEMENT CORRECTION PROCESSING OF DOCUMENT ID

S707

IMPLEMENT CORRECTION PROCESSING OF DOCUMENT ID

ACQUIRE RETRIEVAL RESULTS FOR ALL INTERNAL REPRESENTATION — S708

MERGE RETRIEVAL RESULTS OF EACH INDEX — S709

OUTPUT FINAL RETRIEVAL RESULTS — S710

STOP

# FIG. 28

ANDNOT

REGEX          CD

A.*B

# FIG. 29A

INTERNAL REPRESENTATION
CORRESPONDING TO FIRST INDEX

ANDNOT

REGEX          CD

A.*B

MINIMUM DOCUMENT ID : 1
MAXIMUM DOCUMENT ID : 10

# FIG. 29B

INTERNAL REPRESENTATION
CORRESPONDING TO SECOND INDEX

ANDNOT

REGEX          CD

A.*B

MINIMUM DOCUMENT ID : 11
MAXIMUM DOCUMENT ID : 20

# FIG. 30

RETRIEVAL
REQUIREMENT
STATEMENT

RETRIEVAL
RESULT

```
30 ┐
┌──────────────┐        ┌──────────────┐   11
│  RETRIEVAL   │        │  RETRIEVAL   │
│  CONDITION   │────────▶│  CONDITION   │
│ GENERATION   │        │  ANALYSIS    │
│   SECTION    │        │   SECTION    │
└──────────────┘        └──────────────┘
                                │
                                ▼
                        ┌──────────────┐   17        ┌──────────────┐   15
                        │  RETRIEVAL   │              │   MERGING    │
                        │   SECTION    │─────────────▶│   SECTION    │
                        └──────────────┘              └──────────────┘
```

┌ ─ ─ ─ ─ ─ ─ ─ ─ ─ ─ ─ ─ ─ ─ ─ ─ ─ ─ ─ ─ ─ ─ ─ ─ ─ ─ ┐   ~ 16

│   ┌──────────┐      ┌──────────┐      ┌──────────┐                │
│   │  INDEX   │      │  INDEX   │      │  INDEX   │    ·  ·  ·      │
│   └──────────┘      └──────────┘      └──────────┘                │
└ ─ ─ ─ ─ ─ ─ ─ ─ ─ ─ ─ ─ ─ ─ ─ ─ ─ ─ ─ ─ ─ ─ ─ ─ ─ ─ ┘

# FIG. 31

```
        ( START )
            │
            ▼
┌───────────────────────────┐
│ ACQUIRE RETRIEVAL REQUIREMENT │──── S801
│         STATEMENT          │
└───────────────────────────┘
            │
            ▼
┌───────────────────────────┐
│  SELECT RETRIEVAL WORD BY  │
│   MORPHOLOGICAL ANALYSIS   │──── S802
│    TO THEREBY GENERATE     │
│    RETRIEVAL CONDITIONS    │
└───────────────────────────┘
            │
            ▼
┌───────────────────────────┐
│ ACQUIRE RETRIEVAL CONDITIONS │──── S803
└───────────────────────────┘
            │
            ▼
┌───────────────────────────┐
│ ANALYZE RETRIEVAL CONDITIONS │──── S804
└───────────────────────────┘
            │
            ▼
┌───────────────────────────┐
│     GENERATE INTERNAL      │──── S805
│ REPRESENTATION FOR EACH INDEX │
└───────────────────────────┘
            │
            ▼
┌───────────────────────────┐
│  REMOVE DOCUMENT ID OUTSIDE │──── S806
│      RETRIEVAL RANGE       │
└───────────────────────────┘
            │
            ▼
┌───────────────────────────┐
│ ACQUIRE RETRIEVAL RESULTS FOR │──── S807
│ ALL INTERNAL REPRESENTATION │
└───────────────────────────┘
            │
            ▼
┌───────────────────────────┐
│    MERGE RETRIEVAL RESULTS │──── S808
│       OF EACH INDEX        │
└───────────────────────────┘
            │
            ▼
┌───────────────────────────┐
│ OUTPUT FINAL RETRIEVAL RESULTS │──── S809
└───────────────────────────┘
            │
            ▼
        ( STOP )
```